(19) Europäisches Patentamt
European Patent Office
Office européen des brevets

(11) **EP 4 614 217 A1**

(12) **EUROPEAN PATENT APPLICATION**
published in accordance with Art. 153(4) EPC

(43) Date of publication:
**10.09.2025 Bulletin 2025/37**

(51) International Patent Classification (IPC):
**G02F 1/13** (2006.01)

(21) Application number: **22966084.0**

(52) Cooperative Patent Classification (CPC):
**G02F 1/13**

(22) Date of filing: **22.11.2022**

(86) International application number:
**PCT/CN2022/133515**

(87) International publication number:
**WO 2024/108384 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• XU, Yifan
  Shenzhen, Guangdong 518129 (CN)
• LIU, Jun
  Shenzhen, Guangdong 518129 (CN)
• LIU, Luochen
  Shenzhen, Guangdong 518129 (CN)

(74) Representative: **Maiwald GmbH
Engineering
Elisenhof
Elisenstrasse 3
80335 München (DE)**

(54) **LIGHT SHIELDING ASSEMBLY, DETECTION APPARATUS, AND TERMINAL**

(57)    A light shielding component (100), a detection apparatus, and a terminal are provided, and are applied to the field of optical devices and detection technologies. The light shielding component (100) includes a first light shielding plate (10), where a protruding obstacle column (102) and a plurality of protruding sawteeth (101) are disposed on the first light shielding plate (10), and a vertical height of the obstacle column (102) is greater than vertical heights of the plurality of sawteeth (101). Interference of stray light to detection can be reduced by disposing the sawteeth (101) and the obstacle column (102). When the light shielding component (100) is disposed outside a window of the detection apparatus, interference caused by stray light from an external element to detection can be reduced, and a possibility of detecting an echo signal by the detection apparatus by mistake can be significantly reduced. In this way, ranging precision is improved and detection performance is improved.

FIG. 14

# Description

## TECHNICAL FIELD

This application relates to the field of optical devices and detection technologies, and in particular, to a light shielding component, a detection apparatus, and a terminal.

## BACKGROUND

With development of information technologies and computer vision, detection technologies develop rapidly, and various detection apparatuses bring great convenience to people's life and travel. The detection apparatus may be considered as an "eye" for sensing an environment, and includes a vision sensor like a camera and radar sensors such as a millimeterwave radar, a lidar, and an ultrasonic radar. A lidar (light detection and ranging, Lidar, light detection and ranging) technology has significant advantages in a detection range, ranging precision, and reliability, features near-all-weather operation, is a key sensor in the sensing field, and plays an important role in fields such as intelligent driving, intelligent transportation, surveying and mapping, and intelligent manufacturing. A principle of lidar detection is as follows: Detection signal light is emitted and an echo signal from a target in a field of view is received, to obtain related information of the target.

For a radar installation position, a mainstream lidar is usually installed outside a device, for example, installed outside a vehicle body or a logistics robot body, so that the lidar is not affected by reflection of a windshield, and has good optical performance. Installation outside the device causes accelerated aging of the lidar. This affects a service life, and also affects wind resistance and appearance of a vehicle.

If the lidar is disposed inside a windshield, an aging speed of the lidar can be greatly reduced. However, the windshield has a large area, and cannot be implemented through a precision optical device. In addition, the windshield is exposed to the environment, and a surface of the windshield is often slightly worn and has a deposit of some dust. These factors lead to low transmittance, a high reflectivity, high scattering, and the like of the windshield. The windshield reflects the detection signal light emitted by the lidar and introduces a large amount of stray light. Consequently, the lidar is interfered and ranging precision of the lidar is affected.

## SUMMARY

Embodiments of this application provide a light shielding component, a detection apparatus, and a terminal, to reduce interference of stray light to detection, improve ranging precision of the detection apparatus, and improve detection performance.

**According to a first aspect,** an embodiment of this application provides a light shielding component, including:

a first light shielding plate, where a protruding obstacle column and a plurality of protruding sawteeth are disposed on the first light shielding plate, and a vertical height of the obstacle column is greater than vertical heights of the plurality of sawteeth.

In this embodiment of this application, in one aspect, the plurality of sawteeth are disposed on the first light shielding plate, so that when stray light reaches the plurality of sawtooth parts of the first light shielding plate, the stray light may be partially absorbed or dispersed by the sawteeth. Even if the stray light is not absorbed when reaching the sawtooth for a first time, there is a large possibility that the stray light is reflected to another sawtooth again between the sawteeth, to gradually reduce energy intensity of the stray light. Therefore, the plurality of sawteeth may be disposed on the light shielding plate to significantly reduce interference of the stray light to detection.

In another aspect, the obstacle column higher than the sawtooth is disposed, so that stray light that is not consumed by the sawtooth (for example, stray light propagated on a surface of the first light shielding plate) may be blocked by the obstacle column, to further reduce interference of the stray light to detection.

Optionally, the light shielding component may be disposed outside a window of the detection apparatus. Because the detection apparatus performs ranging by detecting an echo signal, interference caused by stray light from an external element to detection is reduced, and a possibility of detecting the echo signal by the detection apparatus by mistake can be significantly reduced. In this way, ranging precision is improved and detection performance is improved.

In addition, in the foregoing manner, a capability of the detection apparatus to resist the interference of the stay light is improved. The detection apparatus may be disposed inside the external element (for example, inside a cabin of a vehicle or a robot), so that the detection apparatus can be free from impact of an external high temperature, rain, and weathering. This not only prolongs a service life of a lidar, but also makes an installation position of the lidar be more flexible, so that user experience is improved.

**In a possible implementation of the first aspect,** a surface of the obstacle column is made of a low-reflectivity material.

The low-reflectivity material has weak reflection effect on light. Therefore, when the stray light reaches the light shielding plate, a possibility that the stray light is reflected can be reduced through the low-reflectivity material, and interference of the stray light to detection can be reduced.

For example, a surface of the obstacle column is made of a first material, and a reflectivity of the first material is lower than a first threshold. For example, the first threshold is 40%, 30%, 20%, 10%, 5%, 2%, or 1%.

Optionally, the reflectivity herein may be a reflectivity at a preset temperature (usually a normal temperature, for example, about 25 degrees Celsius, or a standard condition, or 0 degrees Celsius).

**In a possible implementation of the first aspect,** surfaces of the plurality of sawteeth are made of a low-reflectivity material. For example, surfaces of the plurality of sawteeth are made of a second material, and a reflectivity of the second material is less than a second threshold. For example, the second threshold is 40%, 30%, 20%, 10%, 5%, 2%, or 1%.

**In a possible implementation of the first aspect,** a surface (for example, a surface on which the obstacle column and the sawtooth are disposed) of the first light shielding plate is made of a low-reflectivity material.

Optionally, a surface of the first light shielding plate is made of a third material, and a reflectivity of the third material is less than a third threshold. For example, the first threshold is 40%, 30%, 20%, 10%, 5%, 2%, or 1%.

Optionally, the first material, the second material, and the third material may be a same material, or may be different materials. The first threshold, the second threshold, and the third threshold may be the same, or may be different.

**In a possible implementation of the first aspect,** each of the plurality of sawteeth tilts toward a side of the obstacle column.

In this implementation, when the plurality of sawteeth tilt, sawtooth tips are "sharper", so that energy of the stray light is reduced.

However, when the sawtooth tilts toward a side of the obstacle column, the stray light is more likely to be incident to a side that is of the sawtooth and that is away from the obstacle column, and may be reflected to the side away from the obstacle column even if the stray light is not absorbed and/or consumed.

In this case, the obstacle column is disposed between the sawtooth and the window of the detection apparatus, so that the sawtooth and the obstacle column can consume stray light that may enter the window of the detection apparatus. This reduces a possibility that the stray light enters the detection apparatus, so that interference caused by the stray light is reduced.

**In a possible implementation of the first aspect,** the light shielding component is disposed outside the window of the detection apparatus, and the obstacle column is located between the window and the plurality of sawteeth.

In the foregoing implementation, the light shielding component is disposed outside the window of the detection apparatus, so that interference of stray light from an external element to detection can be reduced, and a possibility of detecting an echo signal by the detection apparatus by mistake can be significantly reduced. In this way, ranging precision is improved and detection performance is improved.

The obstacle column is disposed between the window and the plurality of sawteeth, and may block the stray light propagated toward the window (that is, the stray light is absorbed or reflected to be away from the window), so that stray light entering the window is further reduced and interference is reduced.

In addition, residual light that exceeds an edge of an angle of view in detection signal light from the window may also cause interference to the detection apparatus, and the obstacle column may further block the stray light from the window direction, to further reduce the interference.

**In a possible implementation of the first aspect,** the light shielding component is located between the window and a first transparent surface, each of the plurality of sawteeth includes a first edge and a second edge, the first edge is close to the window, and the second edge is away from the window; and

an included angle between the second edge and a horizontal direction is related to an included angle between the first transparent surface and the horizontal direction and an angle of view of the detection apparatus in a vertical direction.

The first transparent surface may be a surface of a transparent housing of a device in which the detection apparatus is located. For example, the detection apparatus is disposed in a cockpit, and the first transparent surface is a surface of a windshield. For another example, the detection apparatus is disposed in a chest cavity of the robot, and the first transparent surface is a surface of a transparent housing in front of a chest of the robot.

In the foregoing implementation, when a tilt angle of the second edge of the sawtooth and an angle at which the stray light is reflected from the transparent surface to the sawtooth are close to each other, the stray light can be more accurately propagated to a gap between two sawteeth, so that effect of consuming signal light by the sawtooth is improved and light shielding efficiency is improved.

Optionally, the included angle $\gamma$ between the second edge and the horizontal direction satisfies the following formula: $\left| \gamma - \left( 2\beta - \frac{\alpha}{2} \right) \right| < x$, where x is close to 0 , $\gamma$ is the included angle between the second edge and the horizontal direction, $\alpha$ is the angle of view of the detection apparatus, $\beta$ is the included angle between the first transparent surface and the horizontal direction, and x is an absolute value of a difference between $\gamma$ and $\left( 2\beta - \frac{\alpha}{2} \right)$.

For example, x=5°, or x=1°.

**In a possible implementation of the first aspect,** the included angle between the second edge and the horizontal direction satisfies the following formula:

$$\gamma = 2\beta - \frac{\alpha}{2},$$

where

$\gamma$ is the included angle between the second edge and the horizontal direction, $\alpha$ is the angle of view of the detection apparatus, and $\beta$ is the included angle between the first transparent surface and the horizontal direction.

In this implementation, when detection signal light that is close to a lower edge of the field of view (field of view, FOV) in the vertical direction is incident to the first transparent surface, an incident angle is larger, and therefore stray light is stronger. The included angle between the second edge and the horizontal direction is set to make the second edge be parallel to a direction of signal light reflected after the detection signal light on the lower edge of the FOV is incident to the transparent surface, so that a possibility that stray light formed after the detection signal light is incident to the transparent surface at a large angle enters the detection apparatus can be significantly reduced, and light shielding efficiency is improved.

**In a possible implementation of the first aspect,** an included angle between the first light shielding plate and the horizontal direction is half of the angle of view of the detection apparatus in the vertical direction.

In the foregoing implementation, the first light shielding plate is disposed in an inclined manner, so that the first light shielding plate can be closer to an edge of the detection signal light emitted by the detection apparatus, and does not block normal detection signal light. This can maximize space utilization, and also can achieve effect of surrounding the field of view through the light shielding plate, so that light shielding efficiency is improved.

Optionally, the obstacle column and the plurality of sawteeth are disposed on a first surface of the first light shielding plate. An included angle between the first surface of the first light shielding plate and the horizontal direction may be used as the included angle between the first light shielding plate and the horizontal direction.

**In a possible implementation of the first aspect,** a first cavity is further disposed on the first light shielding plate, and an opening of the first cavity is provided on a side that is of the obstacle column and that is away from the plurality of sawteeth.

In this implementation, stray light entering the cavity may be consumed through the cavity. The consumption herein means that the stray light may be received through a surface of the cavity or may be reflected a plurality of times between inner walls of the cavity to gradually reduce energy intensity of the stray light. To be specific, most of the stray light is absorbed on the inner wall of the cavity. Even if the stray light is reflected on the inner wall of the cavity, there is a large possibility that the reflected light is transmitted to another inner wall of the cavity, so that the stray light is absorbed a plurality of times, and energy intensity of the stray light is reduced.

In a possible case, when the detection apparatus is disposed inside the device, an optical signal at an edge of the field of view may be irradiated to the inside of the device or on an external component of the device, to form a large amount of stray light. In addition, there is usually residual light that exceeds a preset angle of view at the edge of the field of view of the detection apparatus, and the residual light may also cause stray light.

Optionally, stray light entering the cavity may be reflected by the obstacle column. In this implementation, a first cavity is disposed on a side that is of the obstacle column and that is away from the plurality of sawteeth, so that detection signal light transmitted close to the light shielding plate can be blocked, and stray light caused by invalid detection signal light is reduced. This reduces detection interference.

**In a possible implementation of the first aspect,** a length of an opening of the first cavity is less than a length of a bottom wall of the first cavity.

That is, the first cavity is a cavity with a "narrow opening". Because the opening is small, it is difficult for light to be emitted from the opening after entering the first cavity, so that a possibility that stray light enters the detection apparatus is further reduced, and light shielding efficiency is improved.

Optionally, the length of the opening of the first cavity is a length of the opening of the first cavity in a direction from the obstacle column to the plurality of sawteeth. Similarly, the length of the bottom wall is a length of the opening of the first cavity in a direction from the obstacle column to the plurality of sawteeth.

**In a possible implementation of the first aspect,** a second cavity is further disposed on the first light shielding plate, and an opening of the second cavity is provided between the obstacle column and the plurality of sawteeth.

In this implementation, stray light entering the cavity may be consumed by the second cavity, so that energy intensity of the stray light is reduced.

**In a possible implementation of the first aspect,** a length of an opening of the second cavity is less than a length of a bottom wall of the second cavity. That is, the second cavity is a cavity with a "narrow opening".

Because the opening is small, it is difficult for stay light to be reflected from the opening after entering the first cavity, so that a possibility that stray light enters the detection apparatus is further reduced, and light shielding efficiency is improved.

Optionally, the length of the opening of the second cavity is a length of the opening of the second cavity in a direction from the obstacle column to the plurality of sawteeth. Similarly, the length of the bottom wall is a length of the opening of the second cavity in a direction from the obstacle column to the plurality of sawteeth.

Optionally, stray light entering the second cavity may be reflected by the obstacle column.

**In a possible implementation of the first aspect,** the first light shielding plate is of a trapezoid structure, and the obstacle column is disposed on a leg of the first light shielding plate.

It may be understood that an incident angle is positively correlated with a reflectivity (in other words, a smaller incident angle indicates a smaller reflectivity). When an incident angle of the detection signal light on the first transparent surface is larger, a reflectivity of the first transparent surface to the detection signal light is higher, and generated stray light also increases correspondingly. Because the detection apparatus emits the detection signal light, an incident angle is large when the detection signal light is incident to the first transparent surface at the edge of the field of view. Therefore, the stray light is mainly distributed on two sides (namely, the legs) of the first light shielding plate.

In the foregoing implementation, through a trapezoidal structure (or an inverted V-shaped structure), the obstacle column is disposed on a leg of the trapezoid, so that stray light generated when the detection signal light is incident to the first transparent surface at the edge of the field of view can be effectively suppressed, and light shielding efficiency is improved.

Optionally, no obstacle column may be disposed on an upper base. In some scenarios, the upper base belongs to a small angle of view range, and energy of stray light is weak. Therefore, no obstacle column may be disposed on the upper base, and impact on a transmit angle of view of the detection apparatus is avoided.

**In a possible implementation of the first aspect,** the first light shielding plate is axisymmetric along a center line of the first light shielding plate.

In this implementation, a symmetric design is used, so that light shielding effect on two sides of the field of view can be average, different precision of detection results on the left and right sides is avoided, and service quality and user experience are improved. It should be understood that, in a specific implementation process, the two sides of the first light shielding plate may not be absolutely symmetric. Herein, it is intended to indicate that the two sides of the first light shielding plate have similar structures, for example, a light shielding structure like an obstacle column, a cavity, or a sawtooth is disposed.

**In a possible implementation of the first aspect,** the first cavity is disposed on the leg of the first light shielding plate. The first cavity is disposed on the leg, so that stray light entering the edge of the field of view can be suppressed, and light shielding efficiency is improved.

**In a possible implementation of the first aspect,** the second cavity is disposed on the leg of the first light shielding plate. The second cavity is disposed on the leg, so that stray light entering the edge of the field of view can be suppressed, and light shielding efficiency is improved.

**In a possible implementation of the first aspect,** the plurality of sawteeth are disposed on the leg of the first light shielding plate. The plurality of sawteeth are disposed on the leg, so that stray light entering the edge of the field of view can be suppressed, and light shielding efficiency is improved.

**In a possible implementation of the first aspect,** the plurality of sawteeth are implemented through columnar bodies whose cross sections are triangular, and the sawteeth extend from a leg on one side of the first light shielding plate to a leg on the other side of the first light shielding plate.

That is, the plurality of sawteeth are disposed on the legs of the first light shielding plate and the upper base of the first light shielding plate.

In this implementation, the plurality of sawteeth are designed as a structure in which the plurality of sawteeth are connected from the leg on one side, to the upper base, and then to the leg on the other side, to avoid introducing a new reflective surface near the upper base, and reduce a probability of generating stray light. The plurality of sawteeth are arranged along the first light shielding plate of the trapezoidal structure, are distributed in an inverted V shape on two sides, and are distributed along the upper base on the middle part, so that stray light that is incident to a sawtooth is reflected to a side wall of another sawtooth. This prevents stray light from being reflected back to the detection apparatus as much as possible, and reduces energy of the stray light.

**In a possible implementation of the first aspect,** the obstacle column tilts toward a side away from the plurality of sawteeth.

The obstacle column tilts toward the side away from the plurality of sawteeth, so that the obstacle column can reflect stray light to a side away from the detection apparatus in a targeted manner. This further reduces a possibility that the stray light enters the detection apparatus, so that interference caused by the stray light is reduced.

In a case in which the first cavity is disposed on the first light shielding plate, the obstacle column tilts toward a side of the first cavity, so that a possibility that stray light from the side of the first cavity is reflected by the obstacle column to the first cavity can be improved, interference caused by the stray light is further reduced, and light shielding efficiency is improved.

**In a possible implementation of the first aspect,** an included angle between the obstacle column and a surface of the first light shielding plate falls within [35°, 45°].

The surface of the first light shielding plate herein may be a surface on which the first obstacle column is disposed between a plurality of surfaces of the first light shielding plate.

**In a possible implementation of the first aspect,** the obstacle column includes a first branch and a second branch, the first branch tilts toward the side away from the plurality of sawteeth, and the second branch is connected to the first branch and a body of the first light shielding plate, and

an included angle between the first branch and the horizontal direction is a first angle, an included angle between the second branch and the horizontal direction is a second angle, and the first angle is less than the second angle.

In this implementation, in a first case, stray light that is incident from the plurality of sawteeth may be reflected by the second branch to the plurality of sawteeth (or the second cavity). In a second case, stray light that is incident in a direction away from the plurality of sawteeth may be reflected in a direction toward the light shielding plate by the first branch and the second branch (when the first cavity is disposed, the stray light may be reflected into the first cavity). A half bounding frame may be formed by tilting at two different angles. This not only does not reduce the stay light elimination effect described in the first case, but also improves the stay light elimination effect in the second case, so that overall light shielding efficiency is improved.

**In a possible implementation of the first aspect,** the light shielding component further includes a second light shielding plate and a third light shielding plate, and the first light shielding plate and the second light shielding plate are disposed on two sides in a direction from the obstacle column to the plurality of sawteeth, and are separately connected to the first light shielding plate.

In this implementation, the three light shielding plates may surround receiving and sending fields of view of the detection apparatus, so that interference of side stray light to detection is reduced and light shielding efficiency is improved.

**In a possible implementation of the first aspect,** the light shielding component is located between the window and the first transparent surface; and

a plurality of beams of detection signal light from the window are incident to the first transparent surface, and the light shielding component is configured to consume energy of at least one beam of detection signal light reflected by the first transparent surface.

In the foregoing implementation, when the signal light emitted by the detection apparatus is incident to the first transparent surface, the light shielding component can reduce a possibility that the signal light reflected by the first transparent surface returns to the detection apparatus, and improve detection precision of the detection apparatus. In addition, the detection apparatus is possibly disposed inside the device, so that the detection apparatus can be protected by an optical element, and a service life of the detection apparatus is prolonged.

**In a possible implementation of the first aspect,** the plurality of detection optical signals include first detection signal light, and the first detection signal light is reflected by the first transparent surface to form first reflected light; and

the first reflected light is transmitted to the plurality of sawteeth, and the plurality of sawteeth are configured to consume energy of the first reflected light.

In a possible case, when no light shielding component is disposed, first reflected light is likely to generate diffuse reflection on another object, and then reaches the detection apparatus again. The first reflected light may be consumed by the sawtooth part, where the consumption herein includes absorbing a part or all of the first reflected light, and/or reflecting a part of the first reflected light to a direction away from a reflection end, and the like, so as to reduce the energy intensity of the first reflected light.

**In a possible implementation of the first aspect,** the plurality of detection optical signals include second detection signal light, and the second detection signal light is reflected by the first transparent surface to form second reflected light;

the second reflected light is transmitted to the plurality of sawteeth, and is reflected by the plurality of sawteeth to form third reflected light; and
the third reflected light is transmitted to the obstacle column, and the obstacle column is configured to block the third reflected light.

In a possible case, the second reflected light formed by reflection through the first transparent surface may be reflected by a reflective surface to form third reflected light, and the third reflected light is transmitted in a direction approximately parallel to the first light shielding plate and reaches the detection apparatus, so that the detection apparatus responds to the third reflected light, forming false detection. In the foregoing implementation, the obstacle column higher than the sawtooth is disposed, so that the third reflected light (for example, a signal propagated on the surface of the light shielding plate) that is not consumed by the sawtooth (or reflected from another reflective surface) may be blocked by the obstacle column, and interference of the stray light to detection is further reduced.

It should be understood that the blocking herein may be absorption by the obstacle column, or reflection by the obstacle column to a side away from the detection apparatus.

**In a possible implementation of the first aspect,** the light shielding component is located between the window and the first transparent surface; and third detection signal light from the window is transmitted to the obstacle column, and is reflected by the obstacle column to form fourth reflected light, the fourth reflected light is transmitted to the first cavity, and the first cavity is configured to consume energy of the fourth reflected light.

It can be seen that the obstacle column may reflect the third detection signal light, to form the fourth reflected light. After being transmitted to the first cavity, the fourth reflected light may be consumed by the first cavity, to avoid generation of stray light and improve ranging precision of the detection apparatus.

**In a possible implementation of the first aspect,** the light shielding component is located between the window and the first transparent surface;

fourth detection signal light from the window is incident to the first transparent surface and is reflected by the first transparent surface, to form fifth reflected light;
the fifth reflected light is transmitted to the plurality of sawteeth, and is reflected by the plurality of sawteeth to form sixth reflected light; and
the sixth reflected light is transmitted to the obstacle column, and is reflected by the plurality of sawteeth to form seventh reflected light, and the second cavity is configured to consume energy of the seventh reflected light.

In this implementation, the sixth reflected light that is incident to the obstacle column may be reflected to form the seventh reflected light. In this case, if the seventh reflected light is transmitted to the first cavity, it is likely that the seventh reflected light is captured through the first cavity. This reduces a probability that the seventh reflected light reaches the detection apparatus after being transmitted, and improves light shielding efficiency.

**According to a second aspect,** an embodiment of this application further provides a detection apparatus, where the detection apparatus includes a detection apparatus body and a light shielding component, and the light shielding component is the light shielding component according to any implementation of the first aspect.

The detection apparatus body includes a window, and detection signal light emitted by the detection apparatus body is emitted through the window.

The light shielding component is disposed outside the window.

**According to a third aspect,** an embodiment of this application further provides a terminal. The terminal includes a detection apparatus, a light shielding component, and a windshield, and the light shielding component is the light shielding component according to any implementation of the first aspect.

The windshield of the terminal has a first transparent surface.

The detection apparatus includes a window, and detection signal light emitted by the detection apparatus is emitted through the window.

The light shielding component is disposed between the window and the first transparent surface.

Optionally, the terminal is a vehicle, an uncrewed aerial vehicle, or a robot.

For beneficial effect of the second aspect and the third aspect of this application, refer to the beneficial effect of the first aspect. Details are not described herein again.

## BRIEF DESCRIPTION OF DRAWINGS

The following briefly describes the accompanying drawings used for describing embodiments.

FIG. 1 is a diagram of an installation position of a detection apparatus according to an embodiment of this application;
FIG. 2A is a diagram of an optical path of stray light according to an embodiment of this application;
FIG. 2B is a diagram of another optical path of stray light according to an embodiment of this application;
FIG. 3 is a diagram of a structure of a light shielding component according to an embodiment of this application;
FIG. 4A is a diagram of an optical path according to an embodiment of this application;
FIG. 4B is a diagram of another optical path according to an embodiment of this application;
FIG. 5 is a diagram of another structure of a light shielding component according to an embodiment of this application;
FIG. 6 is a diagram of another optical path according to an embodiment of this application;
FIG. 7 is a diagram of another optical path according to an embodiment of this application;
FIG. 8A is a diagram of an optical path according to an embodiment of this application;
FIG. 8B is a diagram of an optical path according to an embodiment of this application;
FIG. 9 is a diagram of an angle of view and an optical path of a detection apparatus;
FIG. 10 is a diagram of a stray light generation scenario;
FIG. 11 is a diagram of another structure of a light shielding component according to an embodiment of this application;
FIG. 12 is a diagram of another possible optical path according to an embodiment of this application;
FIG. 13 is a diagram of another structure of a light shielding component according to an embodiment of this application;
FIG. 14 is a diagram of another optical path according to an embodiment of this application;
FIG. 15 is a diagram of another structure of a light shielding component according to an embodiment of this application;
FIG. 16 is a diagram of another structure of a light shielding component according to an embodiment of this application;
FIG. 17 is a diagram of another structure of a light shielding component according to an embodiment of this application;
FIG. 18 is a diagram of another structure of a light shielding component according to an embodiment of this application;
FIG. 19 is a diagram of another structure of a light shielding component according to an embodiment of this application;
FIG. 20 is a diagram of another structure of a light shielding component according to an embodiment of this application;

FIG. 21 is a diagram of another structure of a light shielding component according to an embodiment of this application;

FIG. 22 is a diagram of another structure of a light shielding component according to an embodiment of this application;

FIG. 23 is a diagram of another structure of a light shielding component according to an embodiment of this application;

FIG. 24 is a diagram of another structure of a light shielding component according to an embodiment of this application;

FIG. 25A is a diagram of a cross section of a possible detection apparatus according to an embodiment of this application;

FIG. 25B is a diagram of a three-dimensional structure of a possible detection apparatus according to an embodiment of this application;

FIG. 26A is a diagram of a structure of a terminal according to an embodiment of this application; and

FIG. 26B is a diagram of another structure of a terminal according to an embodiment of this application.

Reference numerals:

100: light shielding component; 10: first light shielding plate; 101: sawtooth; 102: obstacle column; 1021: first branch; 1022: second branch; 103: first cavity; 104: second cavity; 201: second light shielding plate; 202: third light shielding plate; 30: bracket; and 901: in-vehicle component.

## DESCRIPTION OF EMBODIMENTS

The following further describes embodiments of this application in detail with reference to the accompanying drawings.

For ease of understanding, the following provides descriptions of some concepts related to embodiments of this application by using examples for reference. Details are as follows.

### 1. Detection apparatus

The detection apparatus mentioned in embodiments of this application may be a lidar, or may be another optical detection apparatus, for example, a fusion detection apparatus (like a detection apparatus integrating a radar detector and an image sensor). The lidar is used as an example. A working principle of the lidar is to emit detection signal light and receive returned signal light to detect a target in a field of view.

The detection apparatus in embodiments of this application can be used in various fields such as intelligent driving, intelligent transportation, intelligent manufacturing, environment detection, surveying and mapping, and uncrewed aerial vehicles, and can complete one or more functions of target detection, distance measurement, speed measurement, target tracking, imaging recognition, and the like.

The detection apparatus in embodiments of this application may be used in a vehicle-mounted detection apparatus (for example, a vehicle-mounted radar), a roadside detection apparatus (for example, an intersection radar), or the like, or may be used in another detection apparatus, for example, a detection apparatus mounted on an apparatus like an uncrewed aerial vehicle, a robot, a railcar, a bicycle, a signal light, a speed measurement apparatus, or a base station. An installation position of the detection apparatus is not limited in this application.

### 2. Field of view (**field of view, FOV**)

A line of sight (line of sight, LOS) area in which transmission of a signal (for example, a radio wave or laser light) is not interrupted is needed between a transmit end of a detection apparatus and a target object and/or between a receive end of the detection apparatus and the target object. The line of sight area may be understood as a field of view.

In the optical field, a size of the field of view is related to an angle of view of the detection apparatus, and a larger angle of view indicates a larger field of view. The angle of view is an included angle formed by two edges of a maximum range of a lens through which an object image of a measured target can pass by using the lens of the detection apparatus as a vertex, and is referred to as an angle of view. In embodiments of this application, an angle of view in a vertical direction is an included angle formed by two edges of a maximum range that can be detected in the vertical direction.

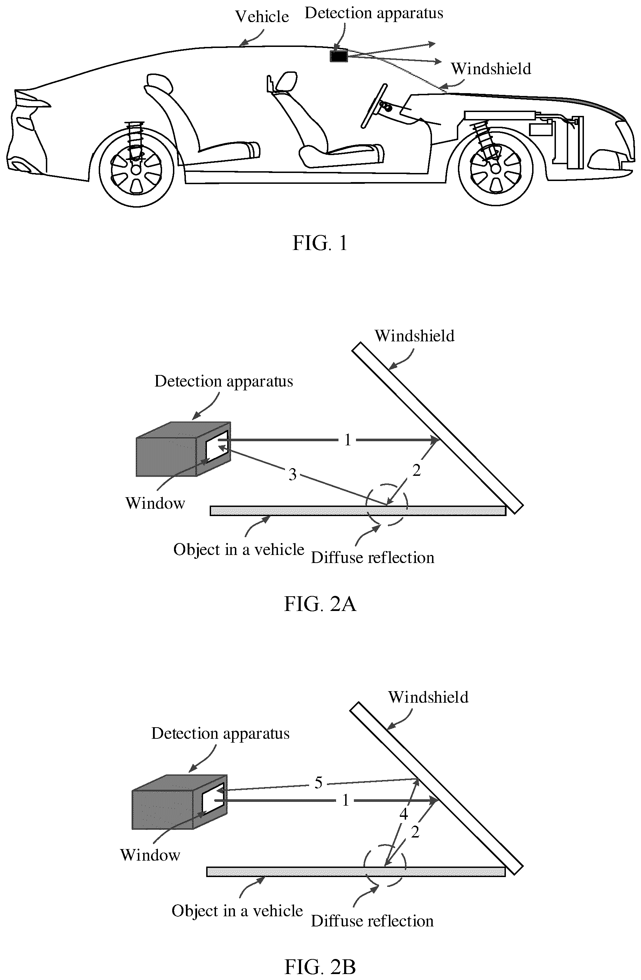

The detection apparatus is installed inside a device, so that a possibility that the detection apparatus is eroded by environmental factors such as a high temperature, weathering, and rain can be reduced, an aging speed is reduced, and a service life is prolonged. FIG. 1 is a diagram of an installation position of a detection apparatus according to an embodiment of this application. For example, the detection apparatus is installed on a vehicle. The detection apparatus may be installed in a cockpit of the vehicle. Because the cockpit is protected by a housing, a service life of the detection apparatus can be prolonged, detection can be performed from a perspective of the cockpit, and availability of a detection result is high.

However, signal light emitted by the detection apparatus needs to be transmitted to the outside of a device for detection through a transparent component (for example, a housing or a windshield) on the device. However, the transparent component usually reflects detection signal light emitted by a lidar, and introduces a large amount of stray light due to low transmittance, a high reflectivity, and high scattering. Consequently, detection is interfered, accuracy of the detection result is affected, and detection performance is poor.

FIG. 2A is a diagram of an optical path of stray light according to an embodiment of this application. A part of detection signal light 1 emitted by a detection apparatus may be reflected by a windshield to form stray light, the stray light may be reflected to another object (for example, an object in a vehicle), and the like, to generate diffuse reflection on the object in the vehicle, and stray light formed through diffuse reflection is likely to return to the detection apparatus. For example, the windshield reflects the detection signal light 1 to form stray light 2, the stray light 2 generates diffuse reflection on the object in the vehicle, and formed stray light 3 enters a window of the detection apparatus, causing interference to detection.

FIG. 2B is a diagram of another optical path of stray light according to an embodiment of this application. For the detection signal light 1 and the stray light 2, refer to the foregoing descriptions. In FIG. 2B, stray light 4 formed through diffuse reflection may be transmitted to the windshield, and is reflected by the windshield for a second time, to form stray light 5. The stray light 5 enters the window of the detection apparatus, causing interference to detection.

A specific process in which the stray light interferes with the detection is as follows: When the stray light is transmitted into the detection apparatus, the detection apparatus responds to the stray light, and a false echo is formed. Consequently, signal incorrect detection and signal missed detection are caused, and detection precision is affected. For example, the stray light 3 formed through diffuse reflection enters the detection apparatus, and may be received by a detector of the detection apparatus. In this case, the detection apparatus incorrectly detects the stray light 3 as an echo in a field of view, and may mistakenly consider that there is a "target" ahead. However, the target actually does not exist, and consequently, accuracy of a detection result of the detection apparatus is reduced. In addition, when signal energy of the stray light 3 is strong, a real echo in the field of view may be submerged. This leads to a series of problems such as missed detection of a signal returned by a real target, incorrect calculation for a distance to the real target, or incorrect calculation for a reflectivity of the real target. Consequently, accuracy of a detection result is reduced, and detection performance of the detection apparatus is poor.

In view of this, embodiments of this application provide a light shielding component, a detection apparatus, and a terminal, to reduce interference of stray light to detection, improve detection precision of the detection apparatus, and improve detection performance.

The following describes in detail solutions in embodiments of this application.

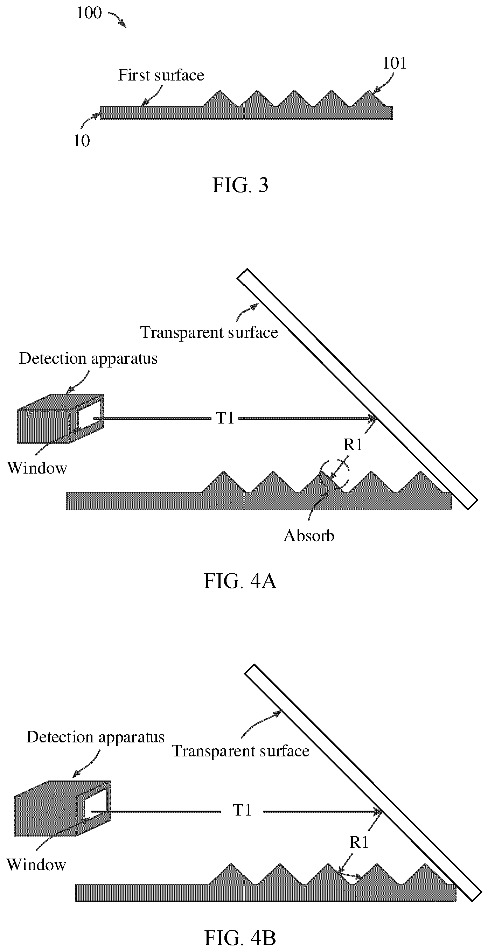

FIG. 3 is a diagram of a possible structure of a light shielding component according to an embodiment of this application. A light shielding component 100 may include a first light shielding plate 10, and a protruding sawtooth 101 is disposed on the first light shielding plate 10. There may be one or more sawteeth 101.

The plurality of sawteeth are disposed on the first light shielding plate, so that when stray light reaches the plurality of sawtooth parts of the first light shielding plate, the stray light may be partially absorbed or dispersed by the sawteeth. Even if the stray light is not absorbed when reaching the sawtooth for a first time, there is a large possibility that the stray light is reflected to another sawtooth again between the sawteeth, to gradually reduce energy intensity of the stray light. Therefore, disposing the plurality of sawteeth on the light shielding plate can significantly reduce stray light in an environment, and correspondingly, interference of the stray light to detection can be reduced.

Refer to FIG. 4A and FIG. 4B. FIG. 4A is a diagram of a possible optical path according to an embodiment of this application, and FIG. 4B is a diagram of another optical path according to an embodiment of this application. In scenarios shown in FIG. 4A and FIG. 4B, a light shielding component is disposed between a detection apparatus and a transparent surface. The detection apparatus may emit a plurality of beams of detection signal light. A beam of detection signal light (which is referred to as first detection signal light for ease of differentiation, namely, a solid line with an arrow marked by "T1" in FIG. 4A) is reflected by the transparent surface to form first reflected light (namely, a solid line with an arrow marked by "R1" in FIG. 4A), and energy of the first reflected light R1 may be consumed through a plurality of sawteeth.

For example, as shown in FIG. 4A, after being irradiated to the sawtooth, the first reflected light R1 is absorbed on a surface of the sawtooth. For another example, in the optical path shown in FIG. 4B, the first reflected light R1 may be reflected a plurality of times in a gap between the sawteeth. Because energy of light is consumed during each reflection, energy intensity of the first reflected light R1 is gradually reduced.

Optionally, the plurality of sawteeth may be closely arranged, that is, a distance between edges of two sawteeth is small, or even is almost 0. It may be understood that, when the sawteeth are closely arranged, most of signal light reflected by the transparent surface is irradiated to the sawteeth, but is not irradiated to a plane between the sawteeth. In this way, consumption of stray light is improved and light shielding efficiency is improved.

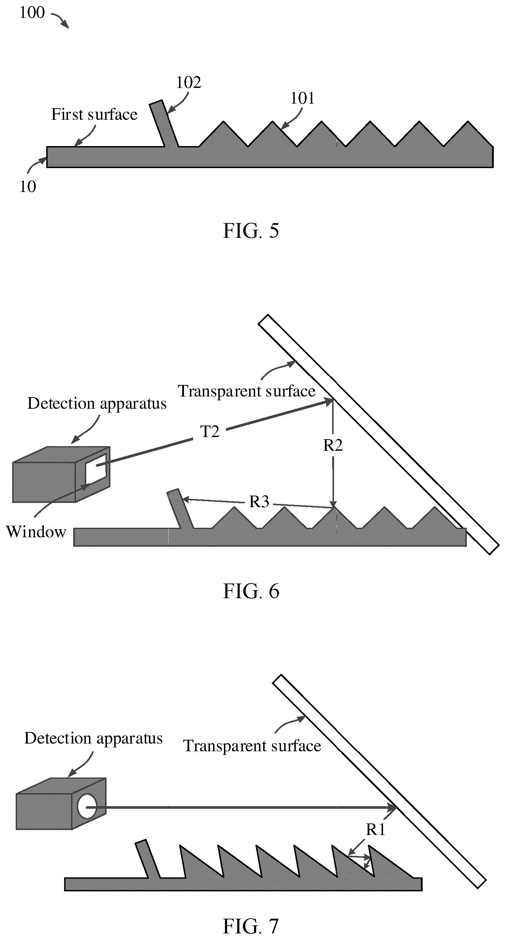

FIG. 5 is a diagram of another possible structure of a light shielding component according to an embodiment of this application. The light shielding component 100 includes the first light shielding plate 10, and a protruding obstacle column 102 is disposed on the first light shielding plate 10.

Optionally, when the first light shielding plate 10 is provided with a plurality of sawteeth 101, the obstacle column 102 is disposed outside the plurality of sawteeth 101, or is disposed between the plurality of sawteeth 101.

Further, optionally, when the first light shielding plate 10 is provided with a plurality of sawteeth 101, a vertical height of the obstacle column 102 is greater than vertical heights of the plurality of sawteeth 101.

The vertical height is a height in a vertical direction, and the height herein may be an absolute height or a relative height. Optionally, the vertical height may be a height (namely, the absolute height) between a position of a highest point and a position in the vertical direction. Alternatively, optionally, that the vertical height of the obstacle column 102 is greater than the vertical heights of the plurality of sawteeth 101 may be understood as that a height (namely, the relative height) of the highest point of the obstacle column relative to a surface of the first light shielding plate is higher than a height of any one of the plurality of sawteeth relative to the surface of the first light shielding plate.

In addition, the plurality of sawteeth 101 shown in FIG. 5 are closely arranged, and the bottom of each sawtooth is close to the bottom of another sawtooth, so that a plane of the light shielding plate is not exposed between the sawteeth as much as possible, and therefore, light shielding efficiency is high.

FIG. 6 is a diagram of another possible optical path according to an embodiment of this application. A light shielding component is disposed between a detection apparatus and a transparent surface. A beam of detection signal light (which is referred to as second detection signal light for ease of differentiation, namely, a solid line with an arrow marked "T2" in FIG. 6) is reflected by the transparent surface to form second reflected light R2. The second reflected light R2 may be reflected by a sawtooth or another component in a vehicle, to finally form signal light transmitted close to the light shielding plate. An obstacle column on a first light shielding plate may block the signal light transmitted close to the light shielding plate.

As shown in FIG. 6, the second reflected light R2 may be reflected on the sawtooth, to form third reflected light R3. In this case, the third reflected light R3 may be blocked by the obstacle column, so that interference of stray light to detection is further reduced. It should be understood that "blocking" herein means being absorbed by the obstacle column, or being reflected by the obstacle column to a direction away from a window.

It should be understood that FIG. 6 is intended to describe a blocking function of the obstacle column. Therefore, an example in which the third reflected light R3 reflected by a part of sawteeth is blocked is used for description, and the obstacle column is not limited to blocking only light reflected by the sawtooth. In a specific implementation process, when a distance between signal light reflected by another component and a surface of the light shielding plate is less than a height of the obstacle column, the signal light may be blocked by the obstacle column.

The foregoing describes the structure of the light shielding component by using an example. The following describes some possible designs of embodiments of this application. It should be noted that the following plurality of designs may be separately implemented, or may be combined. For a combination case, the following also provides example descriptions. The following separately describes the plurality of possible designs first.

[Design 1]

**In a possible design,** a material of the first light shielding plate is a low-reflectivity material. The low-reflectivity material has weak reflection effect on light. Therefore, when the stray light reaches the light shielding plate, a possibility that the stray light is reflected can be reduced through the low-reflectivity material, and interference of the stray light to detection can be reduced.

**In a possible implementation,** a material of a surface of the obstacle column on the first light shielding plate is a low-reflectivity material.

In an example of a material of the obstacle column, a surface of the obstacle column is made of a first material, and a reflectivity of the first material is less than a first threshold. For example, the first threshold is 40%, 30%, 20%, 10%, 5%, 2%, or 1%.

Optionally, the reflectivity herein may be a reflectivity at a preset temperature (usually a normal temperature, for example, about 25 degrees Celsius, or a standard condition, or 0 degrees Celsius).

**In a possible implementation,** the surfaces of the plurality of sawteeth are made of a low-reflectivity material.

In an example of a material of the sawtooth, the surfaces of the plurality of sawteeth are made of a second material, and a reflectivity of the second material is less than a second threshold. For example, the second threshold is 40%, 30%, 20%, 10%, 5%, 2%, or 1%.

**In a possible implementation of the first aspect,** a partial surface (for example, a surface on which the obstacle column and the sawtooth are disposed) of the first light shielding plate is made of a low-reflectivity material.

In an example of a material of the surface of the light shielding plate, the surface of the first light shielding plate is made of a third material, and a reflectivity of the third material is lower than a third threshold. For example, the first threshold is 40%, 30%, 20%, 10%, 5%, 2%, or 1%.

Optionally, a material of the surface of the first light shielding plate may be consistent with a material of a light shielding plate body. In other words, the light shielding plate body is made of a low-reflectivity material.

Alternatively, optionally, a surface of a low-reflectivity material is disposed on the light shielding plate body through spraying, lamination, coating, or the like. A material of the light shielding plate body may not be limited, for example, may be plastic, metal, glass, or a polymer material.

Optionally, the first material, the second material, and the third material may be a same material, or may be different materials. The first threshold, the second threshold, and the third threshold may be the same, or may be different.

[Design 2]

Without being limited to the foregoing design, in another possible design, each of the plurality of sawteeth tilts toward a side of the obstacle column.

For example, the tilting may be represented as follows: In a horizontal direction, a center of gravity of the sawtooth is closer to the obstacle column than a midpoint of a bottom edge of the sawtooth.

For example, when a cross section of the sawtooth is in a shape of a triangle, a bottom edge of the triangle is a first surface, and a vertical distance between a vertex angle of the triangle and the bottom edge is less than a length of a connection line between the triangle and a midpoint of the bottom edge.

In this design, when the plurality of sawteeth tilt, sawtooth tips are "sharper", so that energy of stray light is reduced.

However, when the sawtooth tilts toward a side of the obstacle column, the stray light is more likely to be incident to a surface that is of the sawtooth and that is away from the obstacle column, and may be reflected to the side away from the obstacle column even if the stray light is not absorbed and/or consumed.

In a possible implementation, the light shielding component is disposed outside the window of the detection apparatus, and the obstacle column is located between the window and the plurality of sawteeth.

FIG. 7 is a diagram of another possible optical path according to an embodiment of this application. An obstacle column is disposed between a sawtooth and a window of a detection apparatus, so that the sawtooth and the obstacle column can consume stray light that may enter the window of the detection apparatus. This reduces a possibility that stray light enters the detection apparatus, so that interference caused by the stray light is reduced.

In addition, a tilted sawtooth may make it more likely that stray light R1 is reflected a plurality of times among the sawteeth, so as to absorb the stray light a plurality of times. Even if the stay light is not absorbed, it is more likely that the stay light is incident to a surface that is of the sawtooth and that is away from the window, so that the stray light is reflected to a direction away from the window. In the foregoing implementation, interference caused by the stray light can be further reduced, and detection precision of the detection apparatus can be improved.

In another possible implementation, a light shielding component is located between a window and a transparent surface. Each of the plurality of sawteeth includes a first edge and a second edge, where the first edge is close to the window, and the second edge is away from the window. A tilt angle of the second edge of the sawtooth is parallel to or nearly parallel to most of stray light reflected by the transparent surface to the sawtooth. In this way, the stray light can be more accurately propagated to a gap between two sawteeth. This improves effect of consuming signal light through the sawtooth, and improves light shielding efficiency.

Further, an included angle between the second edge and a horizontal direction is related to an included angle between the first transparent surface and the horizontal direction and an angle of view of the detection apparatus in a vertical direction.

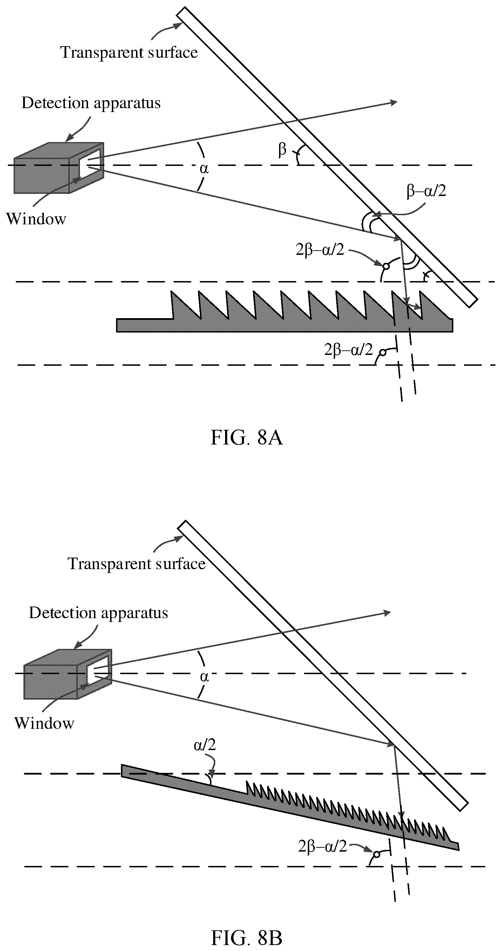

FIG. 8A is a diagram of another possible optical path according to an embodiment of this application. An angle of view of a detection apparatus in a vertical direction is $\alpha$, and an included angle between a transparent surface and a horizontal direction is $\beta$. An included angle between detection signal light emitted close to an edge of the angle of view and the horizontal direction is $\alpha/2$. When the signal light is irradiated to the transparent surface, a complementary angle of an incident angle is $\beta - \alpha/2$. It is easy to obtain, based on a geometric relationship, that an included angle between signal light reflected by the transparent surface and the horizontal direction is $2\beta - \alpha/2$.

Because the first edge of the sawtooth faces the window of the detection apparatus, when stray light incident to the sawtooth is parallel to the second edge, stray light reflected by the sawtooth to the detection apparatus can be reduced. A reflectivity of the transparent surface satisfies the following rule: A larger incident angle indicates a stronger reflectivity and larger spurious emission. However, when the detection signal light close to the edge of the angle of view is incident to the transparent surface, an incident angle is large. Therefore, a tilt degree of the sawtooth is designed based on the angle of view and a tilt degree of the transparent surface, and better light shielding effect can be achieved.

Optionally, an included angle $\gamma$ between the second edge and the horizontal direction satisfies the following formula: $\left| \gamma - \left( 2\beta - \frac{\alpha}{2} \right) \right| < \mathrm{x}$, where x is close to 0 , $\gamma$ is the included angle between the second edge and the horizontal direction, $\alpha$ is the angle of view of the detection apparatus in the vertical direction, $\beta$ is the included angle between the first transparent surface and the horizontal direction, and x is an absolute value of a difference between $\gamma$ and $\left( 2\beta - \frac{\alpha}{2} \right)$.

For example, x=5°, or x=1°. When the second edge is nearly parallel to a direction of a reflected signal, there is a large probability that an optical signal is reflected by the sawtooth to a direction away from the window of the detection apparatus, so that stray light facing a side of the detection apparatus can be further reduced, and light shielding efficiency is improved.

In a possible solution, x may be 0. That is, the included angle between the second edge and the horizontal direction satisfies the following formula:

$$\gamma = 2\beta - \frac{\alpha}{2},$$

where

$\gamma$ is the included angle between the second edge and the horizontal direction, $\alpha$ is the angle of view of the detection apparatus, and $\beta$ is the included angle between the first transparent surface and the horizontal direction.

In the vertical direction, when detection signal light close to a lower edge of the FOV is incident to the transparent surface, an incident angle is larger, and therefore spurious emission is stronger. The included angle between the second edge and the horizontal direction is set to make the second edge be parallel to a direction of signal light reflected after the detection signal light on the lower edge of the FOV is incident to the transparent surface, so that a possibility that stray light returns to the windshield through diffuse reflection is reduced, a possibility that stray light formed after the detection signal light is incident to the transparent surface at a large angle enters the detection apparatus can be significantly reduced, and light shielding efficiency is improved.

In a possible implementation, an included angle between the first light shielding plate and the horizontal direction is half of the angle of view of the detection apparatus in the vertical direction.

Optionally, the obstacle column and the plurality of sawteeth are disposed on a first surface of the first light shielding plate. An included angle between the first surface of the first light shielding plate and the horizontal direction may be used as the included angle between the first light shielding plate and the horizontal direction.

FIG. 8B is a diagram of another possible optical path according to an embodiment of this application. An angle of view of a detection apparatus in a vertical direction is $\alpha$, and an included angle between a first surface and a horizontal direction is half of the angle of view of the detection apparatus, namely, $\alpha/2$. Based on a geometric relationship, it is easy to obtain that an included angle between a sawtooth and the first surface is $2\beta - \alpha$.

In the foregoing implementation, the first light shielding plate is disposed in an inclined manner, so that the first light shielding plate can be closer to an edge of detection signal light emitted by the detection apparatus, and does not block normal detection signal light. This can maximize space utilization, and also can achieve effect of surrounding the field of view through the light shielding plate, so that light shielding efficiency is improved.

[Design 3]

When the detection apparatus is disposed inside a device, when the detection apparatus is disposed inside a device, an optical signal at an edge of the field of view may be irradiated to the inside of the device or on an external component of the device, to form a large amount of stray light. In addition, there is usually residual light that exceeds a preset angle of view at the edge of the field of view of the detection apparatus, and the residual light may also cause stray light. The stray light interferes with detection of the detection apparatus, and affects detection precision.

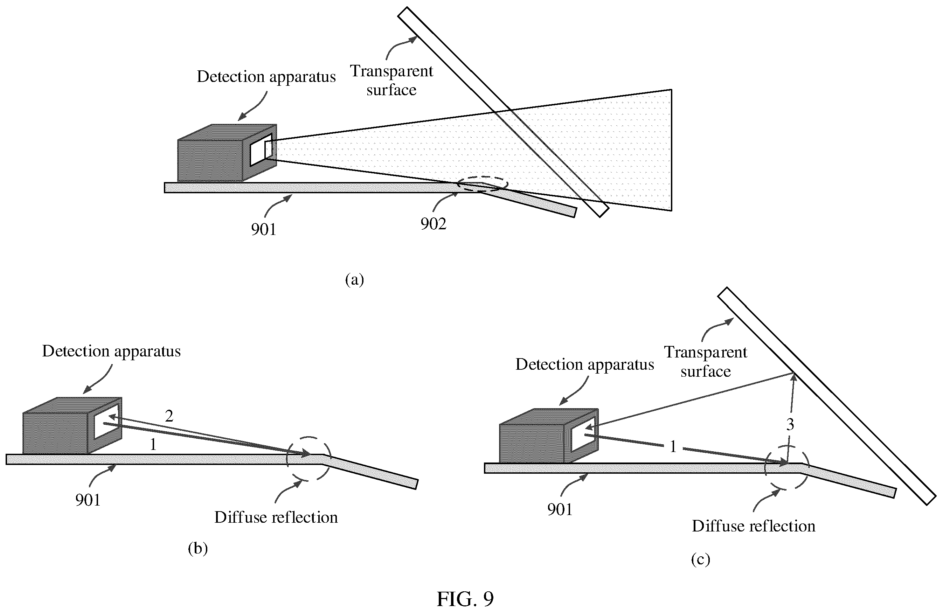

FIG. 9 is a diagram of an angle of view and an optical path of a detection apparatus. Refer to (a) in FIG. 9. An angle of view of the detection apparatus in a vertical direction covers an in-vehicle component 901 on which the detection apparatus is installed. As shown in an area 902, detection signal light at an edge of the angle of view may be irradiated to the in-vehicle component 901, and a diffuse reflection phenomenon occurs on the in-vehicle component 901.

In an optical path diagram shown in (b) in FIG. 9, detection signal light 1 close to the edge of the angle of view is reflected by the in-vehicle component 901 to form stray light 2, and the stray light 2 may directly return to the detection apparatus, causing interference.

In an optical path diagram shown in (c) in FIG. 9, stray light 3 formed after diffuse reflection may be further transmitted to a transparent surface, and is reflected back to the detection apparatus through the transparent surface, causing interference.

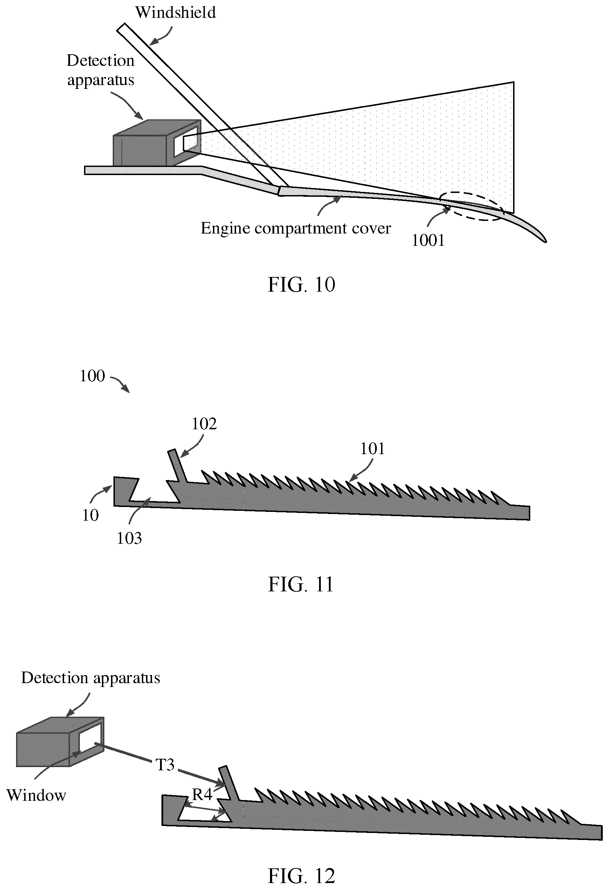

Similarly, stray light formed through diffuse reflection of an outside-vehicle component also causes interference similar to that shown in (b) in FIG. 9. FIG. 10 is a diagram of a stray light generation scenario. For example, a detection apparatus is installed in a vehicle. Detection signal light at an edge of a field of view of the detection apparatus is likely to be irradiated to an engine compartment cover (or referred to as a hood) 1001 of a vehicle, to form diffuse reflection on the engine compartment cover 1001, causing interference.

A light shielding component shown in FIG. 11 can resolve the foregoing problem. FIG. 11 is a diagram of another possible structure of a light shielding component according to an embodiment of this application. The first light shielding plate 10 of the light shielding component 100 is further provided with a cavity (which is referred to as a first cavity below for ease of differentiation) 103. An opening of the first cavity 103 is located on a side that is of the obstacle column 102 and that is away from the plurality of sawteeth 101.

The cavity may consume stray light entering the cavity. The consumption herein means that the stray light may be received through a surface of the cavity or may be reflected a plurality of times between inner walls of the cavity to gradually reduce energy intensity of the stray light. To be specific, most of the stray light is absorbed on the inner wall of the cavity. Even if the stray light is reflected on the inner wall of the cavity, there is a large possibility that reflected light is transmitted to another inner wall of the cavity, so that the stray light is absorbed a plurality of times, and energy intensity of the stray light is reduced.

Optionally, stray light entering the first cavity may be reflected by the obstacle column. In this implementation, a first cavity is disposed on a side that is of the obstacle column and that is away from the plurality of sawteeth, so that detection signal light transmitted close to the light shielding plate can be blocked, and stray light caused by invalid detection signal light is reduced. This reduces detection interference.

FIG. 12 is a diagram of another possible optical path according to an embodiment of this application. As shown in FIG. 12, a beam of detection signal light (which is referred to as third detection signal light for ease of differentiation, namely, T3 shown in FIG. 12) from a detection apparatus is irradiated onto an obstacle column, and is reflected by the obstacle column to form reflected light (which is referred to as fourth reflected light for ease of differentiation, namely, R4 shown in FIG. 12). The reflected light R4 is transmitted to a second cavity, and the second cavity may consume energy of the reflected light R4 (absorb the reflected light R4 or reflect the reflected light R4 a plurality of times in the cavity), to avoid generation of stray light.

Optionally, a length of an opening of the first cavity is less than a length of a bottom wall of the first cavity. That is, the first cavity is a cavity with a "narrow opening". Because the opening is small, after light enters the first cavity, the light has a loss through a plurality of reflections in the cavity, to suppress emission to the outside, so that a possibility that stray light enters the detection apparatus is reduced, and light shielding efficiency is improved.

For example, a shape of a cross section of the first cavity may be a trapezoid or an approximate trapezoid, a lower base of the trapezoid is a bottom wall of the cavity, and an upper base is the opening of the cavity. For another example, the first cavity may be in a shape of an altar with a large belly and a small mouth.

Optionally, the length of the opening of the first cavity is a length of the opening of the first cavity in a direction from the obstacle column to the plurality of sawteeth. Similarly, the length of the bottom wall is a length of the opening of the first cavity in a direction from the obstacle column to the plurality of sawteeth.

In a possible implementation, the third detection signal light T3 is detection signal light at an edge of a field of view of the detection apparatus.

Optionally, the detection apparatus is installed inside a device, and the third detection signal light extends in a propagation direction and then intersects the device (or a component of the device).

In a possible scenario, the detection apparatus is installed inside a vehicle, and the propagation direction of the extended third detection light intersects the engine compartment cover of the vehicle.

In another possible scenario, the detection apparatus is installed on an instrument panel (Instrument Panel, IP) (or referred to as an IP relay station) of the vehicle, and the propagation direction of the extended third detection light intersects the instrument panel of the vehicle.

It can be learned that, when the third detection signal light is invalid signal light of an optical signal that originally needs to be irradiated onto the instrument panel and/or the engine compartment cover, the invalid signal can be blocked and consumed by the obstacle column and the second cavity, to avoid generation of stray light and improve ranging precision of the detection apparatus.

[Design 4]

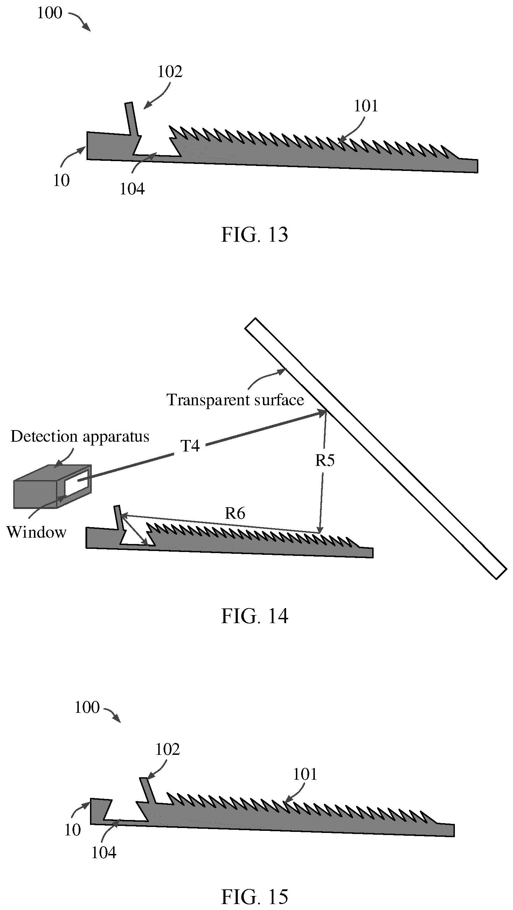

FIG. 13 is a diagram of another possible structure of a light shielding component according to an embodiment of this application. A cavity (which is referred to as a second cavity below for ease of differentiation) 104 is further disposed on the first light shielding plate 10 of the light shielding component 100, and an opening of the second cavity 104 is located between the plurality of sawteeth 101 and the obstacle column 102.

The second cavity 104 may consume entering stray light. The consumption herein means that the stray light may be absorbed inside the cavity or may be reflected a plurality of times between inner walls of the cavity to gradually consume energy of the stray light. To be specific, a part of the stray light may be absorbed on the inner wall of the cavity. Even if the stray light is reflected inside the cavity, there is a large possibility that reflected signal light is transmitted to another inner wall of the cavity, so that the stray light is absorbed a plurality of times, and energy of the stray light is consumed.

Optionally, stray light entering the second cavity may be reflected by the obstacle column. FIG. 14 is a diagram of another possible optical path according to an embodiment of this application. A light shielding component is disposed between a window of a detection apparatus and a transparent surface. A beam of detection signal light (which is referred to as fourth detection signal light for ease of differentiation, namely, T4 shown in FIG. 14) from the detection apparatus is irradiated onto the transparent surface, and is reflected by the first transparent surface to form reflected light (which is referred to as fifth reflected light for ease of differentiation, namely, R5 shown in FIG. 14). The fifth reflected light R5 is transmitted to the plurality of sawteeth, and is reflected by the plurality of sawteeth to form sixth reflected light R6. When the sixth reflected light R6 is transmitted to an obstacle column, a part of the sixth reflected light R6 is reflected by the obstacle column. For example, seventh reflected light R7 obtained through reflection is transmitted to a second cavity, and the second cavity is configured to consume energy of the seventh reflected light R7.

Optionally, the second cavity may be a cavity with a small opening. Because the opening is small, after stray light enters the second cavity, the stray light is reflected a plurality of times in the cavity, to suppress emission to the outside. This further improves light shielding efficiency. For example, a shape of a cross section of the second cavity may be a trapezoid or an approximate trapezoid, a lower base of the trapezoid is a bottom wall of the cavity, and an upper base is the opening of the cavity. For another example, the second cavity may be in a shape of an altar with a large belly and a small mouth.

Optionally, a length of the opening of the second cavity is a length of the opening of the second cavity in a direction from the obstacle column to the plurality of sawteeth. Similarly, a length of the bottom wall is a length of the opening of the second cavity in a direction from the obstacle column to the plurality of sawteeth.

[Design 5]

Without being limited to the foregoing design, in a possible design, an obstacle column tilts toward a side away from a plurality of sawteeth.

FIG. 15 is a diagram of another possible structure of a light shielding component according to an embodiment of this application. As shown in FIG. 15, the obstacle column 102 on the first light shielding plate 10 tilts toward a side away from the plurality of sawteeth 101 tilts.

In this implementation, when the obstacle column tilts toward the side away from the plurality of sawteeth, stray light may be reflected to a light elimination cavity, to improve light shielding efficiency. In this case, a detection apparatus is disposed on a side that is of the obstacle column and that is away from the plurality of sawteeth, so that the obstacle column can reflect stray light to a side away from the detection apparatus in a targeted manner. This further reduces a possibility that the stray light enters the detection apparatus, so that interference caused by the stray light is reduced.

In addition, in a case in which the first cavity 103 is disposed on the first light shielding plate, the obstacle column tilts toward a side of the first cavity 103, so that a possibility that stray light from the side of the first cavity 103 is reflected by the obstacle column to the first cavity can be improved, interference caused by the stray light is further reduced, and light shielding efficiency is improved.

Optionally, an included angle between the obstacle column and a surface of the light shielding plate falls within [35°, 45°]. In this case, a tilt degree is medium, and the first cavity may be surrounded, to prevent stray light from escaping from the first cavity, so that light shielding efficiency is improved. The surface of the first light shielding plate herein may be a surface on which the first obstacle column is disposed between a plurality of surfaces of the first light shielding plate.

Optionally, the top of the obstacle column may be parallel to a first surface, or parallel to an edge of an angle of view of the detection apparatus, to reduce stray light caused by the top of the obstacle column.

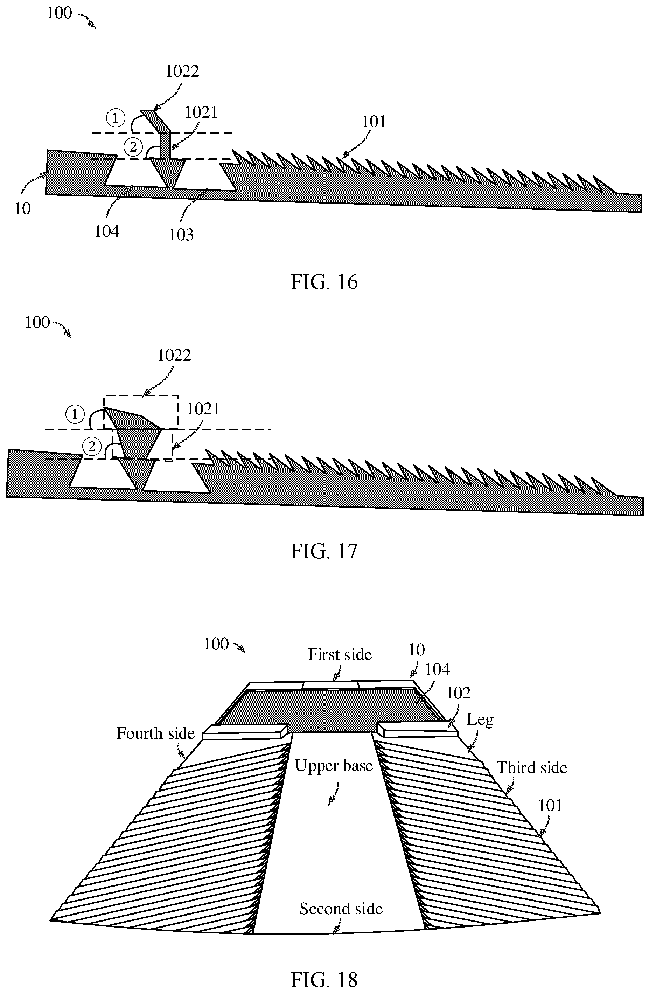

FIG. 16 is a diagram of another possible structure of a light shielding component according to an embodiment of this application. As shown in FIG. 16, an obstacle column includes a first branch 1021 and a second branch 1022, and the first branch 1021 and the second branch 1022 tilt toward a second side.

The second branch 1022 is connected to the first branch 1021 and a body of the first light shielding plate 10, and an included angle between the first branch 1021 and a horizontal direction is a first angle (for example, an angle marked with ① in FIG. 16). An included angle between the second branch 1022 and the horizontal direction is a second angle, and the first angle is greater than the second angle (for example, an angle marked with ② in FIG. 16).

In this implementation, in a first case, stray light that is incident from the plurality of sawteeth may be reflected by the second branch to the plurality of sawteeth (or a second cavity). In a second case, stray light that is incident in a direction away from the plurality of sawteeth may be reflected in a direction toward the light shielding plate by the first branch and the second branch (when the first cavity is disposed, the stray light may be reflected into the first cavity). A half bounding frame may be formed by tilting at two different angles. This not only does not reduce the stay light elimination effect described in the first case, but also improves the stay light elimination effect in the second case, so that overall light shielding efficiency is improved.

Optionally, when a cross section of the branch is in an irregular pattern, an included angle between the horizontal direction and an edge that is of the first branch and that is away from the plurality of sawteeth is the foregoing first angle, and an included angle between the horizontal direction and an edge that is of the second branch and that is away from the plurality of sawteeth is the foregoing second angle.

FIG. 17 is a diagram of another possible structure of a light shielding component according to an embodiment of this application. Cross sections of the first branch 1021 and the second branch 1022 are both in an irregular pattern. For the first branch 1021, an edge away from the plurality of sawteeth tilts in a direction away from the plurality of sawteeth, and an edge close to the plurality of sawteeth tilts toward the plurality of sawteeth, so that stray light on both sides can be better blocked.

In this case, an included angle between the horizontal direction and the edge that is of the first branch 1021 and that is away from the plurality of sawteeth is a first angle (for example, an angle marked with ① in FIG. 17). Similarly, an included angle between the horizontal direction and the edge that is of the first branch 1021 and that is away from the plurality of sawteeth is a second angle (for example, an angle marked with ② in FIG. 17).

[Design 6]

Optionally, a cross section of the first light shielding plate is trapezoidal or inverted V-shaped.

FIG. 18 is a diagram of another possible structure of a light shielding component according to an embodiment of this application. The first light shielding plate 10 in the light shielding component 100 is of a trapezoid structure. The trapezoid structure includes an upper base located above and legs located on sides.

In a possible implementation, the obstacle columns 102 are disposed on the legs of the first light shielding plate.

It may be understood that an incident angle is positively correlated with a reflectivity. To be specific, when an incident angle of detection signal light on a first transparent surface is larger, a reflectivity of the first transparent surface to the detection signal light is higher, and generated stray light also increases correspondingly. Because a detection apparatus emits detection signal light, and an incident angle is large when the detection signal light is incident to the first transparent surface at an edge of a field of view, the stray light is mainly distributed on two sides (namely, the legs) of the light shielding plate.

In the foregoing implementation, through a trapezoidal structure (an inverted V shape when the upper base is not considered), the obstacle columns are disposed on legs of the trapezoid, so that stray light generated when the detection signal light is incident to the first transparent surface at the edge of the field of view can be effectively suppressed, and light shielding efficiency is improved.

Optionally, no obstacle column may be disposed on the upper base. In some scenarios, the upper base belongs to a small angle of view range.

Optionally, the first light shielding plate is symmetrical along an axis of a center line of the first light shielding plate. For example, in the light shielding component shown in FIG. 18, a center line is a connection line between a midpoint on a first side of the first light shielding plate 10 and a midpoint on a second side of the first light shielding plate 10, and the center line is located on the upper bottom surface.

In this implementation, a symmetric design is used, so that light shielding effect on two sides of the field of view can be average, different precision of detection results on the left and right sides is avoided, and service quality and user experience are improved. It should be understood that, in a specific implementation process, absolute symmetry between the two sides may not be implemented. Herein, a similar design may be made on the two sides of the first light shielding plate, and therefore the two sides are described as being relatively symmetric.

**In a possible implementation,** the first cavity 103 extends from a leg on one side of the first light shielding plate 10 to a leg on the other side of the first light shielding plate 10, and passes through the upper base. As shown in FIG. 18, the first cavity 103 extends from a third side of the first light shielding plate 10 to a fourth side of the first light shielding plate 10.

**In a possible implementation,** the first cavity is disposed on the legs of the first light shielding plate. The first cavity is disposed on the legs, so that stray light entering the edge of the field of view can be suppressed, and light shielding efficiency is improved.

Optionally, in a direction from the third side to the fourth side, a length of the first cavity is the same as or similar to a length of the obstacle column. For example, a difference between the length of the first cavity and the length of the obstacle column is less than or equal to 20%, 10%, or 5% of a length of the second cavity.

Because the second cavity may be used in combination with the obstacle column, the length of the second cavity is set to be equivalent to the length of the obstacle column, so that light shielding effect can be improved.

**In a possible implementation,** the second cavity extends from a leg on one side of the first light shielding plate to a leg on the other side of the light shielding plate, and passes through the upper base.

**In a possible implementation,** the second cavity is disposed on the legs of the first light shielding plate. The second cavity is disposed on the legs, so that stray light entering the edge of the field of view can be suppressed, and light shielding efficiency is improved.

Optionally, in a direction from the third side to the fourth side, a length of the second cavity is the same as or similar to a length of the obstacle column.

**In a possible implementation,** the plurality of sawteeth are disposed on the legs of the first light shielding plate. As shown in FIG. 18, the sawteeth 101 are disposed on legs of a trapezoid. The plurality of sawteeth are disposed on the legs, so that stray light entering the edge of the field of view can be suppressed, and light shielding efficiency is improved.

**In a possible implementation,** the plurality of sawteeth extend from a leg on one side of the first light shielding plate to a leg on the other side of the first light shielding plate, and pass through the upper base. That is, the plurality of sawteeth are disposed on the legs of the first light shielding plate and the upper base of the first light shielding plate.

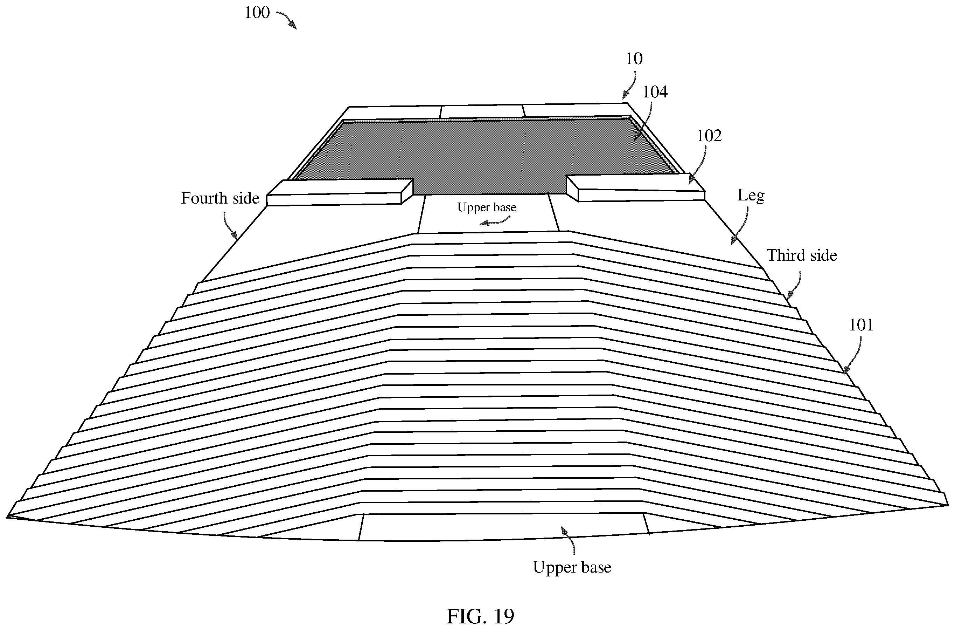

FIG. 19 is a diagram of another possible structure of a light shielding component according to an embodiment of this application. In the light shielding component 100, a plurality of sawteeth on the first light shielding plate 10 extend from a leg on one side (for example, the third side) of the first light shielding plate to a leg on the other side (for example, the fourth side) of the first light shielding plate, and pass through the upper base.

In this implementation, the plurality of sawteeth are designed as a structure in which the plurality of sawteeth are connected from the third side to the fourth side, to avoid introducing a new reflective surface at a position of a sawtooth terminal, and reduce a probability of generating stray light. The plurality of sawteeth are arranged along a trapezoid, distributed in an inverted V shape on two sides, and are distributed along the upper base on the middle part, so that stray light that is incident to a sawtooth is reflected to a side wall of another sawtooth. This prevents stray light from being reflected to a detection apparatus as much as possible, and reduces energy of the stray light.

Optionally, in a light shielding plate of a trapezoidal structure, an upper base of the trapezoid is parallel to a horizontal plane. In this case, parts of the plurality of sawteeth on the upper base of the trapezoidal structure are also parallel along the horizontal plane.

In this implementation, the plurality of sawteeth are designed as a structure in which the plurality of sawteeth are connected from the leg on one side, to the upper base, and then to the leg on the other side, to avoid introducing a new reflective surface near the upper base, and reduce a probability of generating stray light.

Optionally, a cross section of the sawtooth may be in a tooth shape, for example, a triangle.

[Design 7]

Without being limited to the foregoing design, in another possible implementation, the light shielding component further includes a second light shielding plate and a third light shielding plate, and the first light shielding plate and the second light shielding plate are disposed on two sides in a direction from the obstacle column to the plurality of sawteeth, and are separately connected to the first light shielding plate.

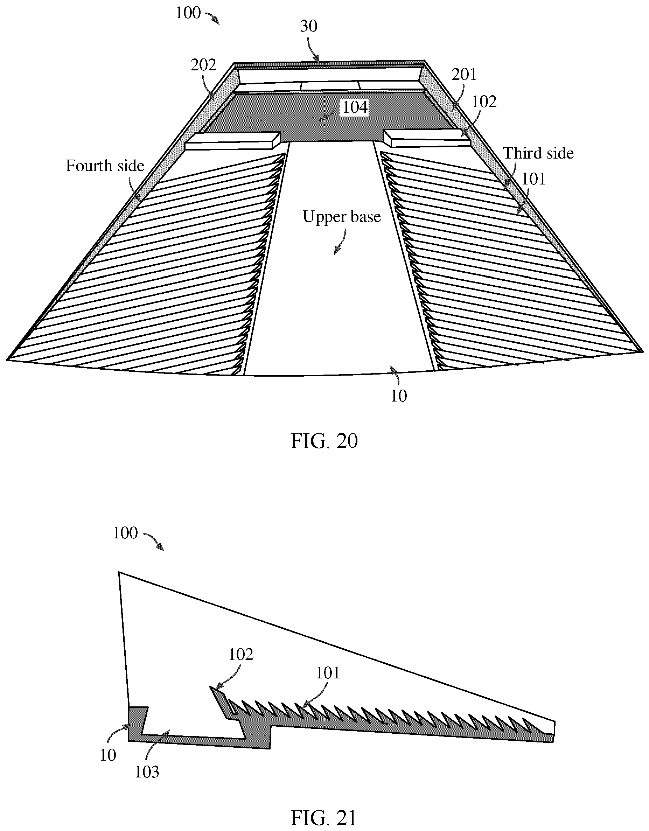

FIG. 20 is a diagram of another possible structure of a light shielding component according to an embodiment of this application. The light shielding component 100 includes a first light shielding plate 10, a second light shielding plate 201, and a third light shielding plate 202. The second light shielding plate 201 is disposed on a third side of the first light shielding plate 10 and is connected to the third side. The second light shielding plate 201 is disposed on a fourth side of the first light shielding plate 10 and is connected to the fourth side. The second light shielding plate 201 and the third light shielding plate 202 surround a part of a surface of the first light shielding plate 10. In this implementation, the three light shielding plates may surround receiving and sending fields of view of a detection apparatus, so that interference of side stray light to detection is reduced and light shielding efficiency is improved.

In a possible implementation, the second light shielding plate 201 may also have a structure similar to that of the first light shielding plate 10, for example, have a sawtooth. For details, refer to the foregoing design of the first light shielding plate 10. Similarly, the third light shielding plate 202 may also have a structure similar to that of the first light shielding plate 10.

Optionally, the light shielding component further includes a bracket 30, and the bracket 30 may be connected to the first light shielding plate 10, the second light shielding plate 201, and the third light shielding plate 202, so that a structure of the light shielding component 100 is more stable.

In addition, in some scenarios, the light shielding component 100 may be more stably installed on the detection apparatus through the bracket 30, to avoid falling off and improve stability.

The foregoing separately describes a plurality of possible designs in embodiments of this application. The following describes several cases of combining a plurality of designs by using examples.

FIG. 21 is a diagram of another possible structure of a light shielding component according to an embodiment of this application. The light shielding component 100 includes a first light shielding plate 10, and a sawtooth 101, an obstacle column 102, and a first cavity 103 are disposed on the first light shielding plate 10.

The first light shielding plate is disposed in an inclined manner. When the light shielding component is configured to shield light for a detection apparatus, an upper surface of the first light shielding plate is parallel to an edge of an angle of view of the detection apparatus.

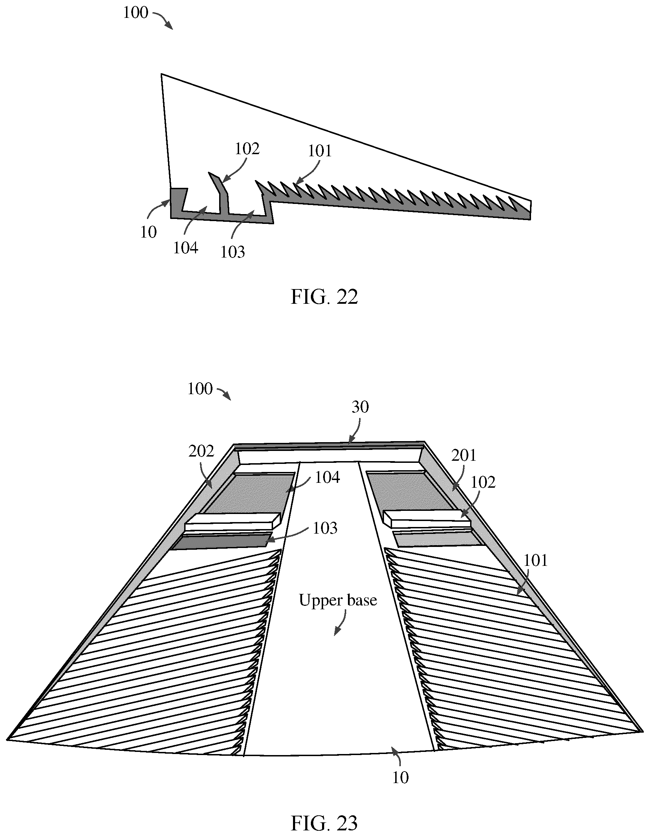

FIG. 22 is a diagram of another possible structure of a light shielding component according to an embodiment of this application. The light shielding component 100 includes a first light shielding plate 10, and a sawtooth 101, an obstacle column 102, a first cavity 103, and a second cavity 104 are disposed on the first light shielding plate 10.

The first light shielding plate is disposed in an inclined manner. When the light shielding component is configured to shield light for a detection apparatus, an upper surface of the first light shielding plate is parallel to an edge of an angle of view of the detection apparatus.

FIG. 23 is a diagram of another possible structure of a light shielding component according to an embodiment of this application. The light shielding component 100 includes a first light shielding plate 10, a second light shielding plate 201, and a third light shielding plate 202. The second light shielding plate 201 and the third light shielding plate 202 surround a part of a surface of the first light shielding plate 10. A sawtooth 101, an obstacle column 102, a first cavity 103, and a second cavity 104 are disposed on the first light shielding plate 10.

The first light shielding plate is of a trapezoid structure, and the sawtooth 101, the obstacle column 102, the first cavity 103, and the second cavity 104 are disposed on legs of a trapezoid.

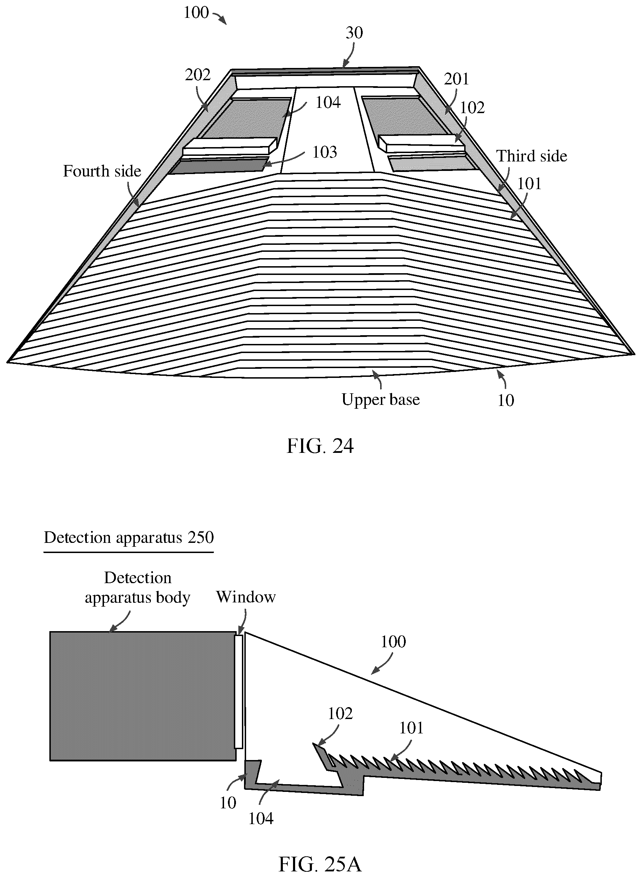

FIG. 24 is a diagram of another possible structure of a light shielding component according to an embodiment of this application. The light shielding component 100 includes a first light shielding plate 10, a second light shielding plate 201, and a third light shielding plate 202. The second light shielding plate 201 and the third light shielding plate 202 surround a part of a surface of the first light shielding plate 10. A sawtooth 101, an obstacle column 102, a first cavity 103, and a second cavity 104 are disposed on the first light shielding plate 10.

The first light shielding plate 10 is of a trapezoid structure, and the obstacle column 102, the first cavity 103, and the second cavity 104 are disposed on legs of a trapezoid. A plurality of sawteeth 101 extend from a leg on one side (for example, a third side) of the first light shielding plate 10 to a leg on the other side (for example, a fourth side) of the first light shielding plate 10 through an upper base.

**An embodiment of this application further provides a detection apparatus. The detection apparatus includes the foregoing light shielding component,** for example, the light shielding component in an embodiment shown in FIG. 3, FIG. 5, FIG. 9, FIG. 14, FIG. 15, FIG. 17, FIG. 18, FIG. 19, FIG. 20, FIG. 21, FIG. 22, FIG. 23, or FIG. 24, and/or a possible implementation thereof.

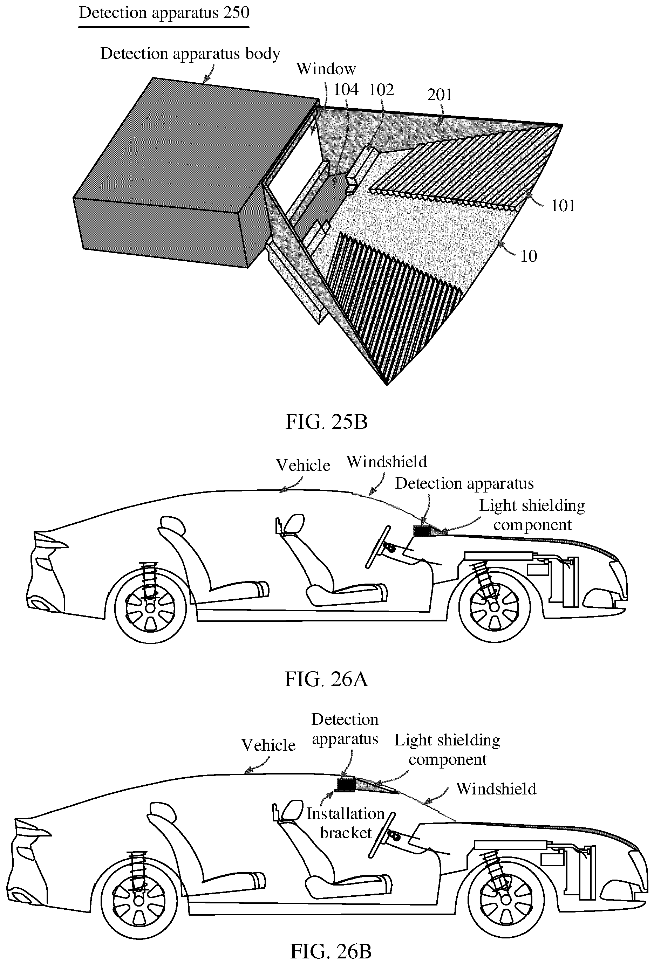

Refer to FIG. 25A and FIG. 25B. FIG. 25A is a diagram of a cross section of a possible detection apparatus according to an embodiment of this application, and FIG. 25B is a diagram of a three-dimensional structure of a possible detection apparatus according to an embodiment of this application.

As shown in FIG. 25A and FIG. 25B, a detection apparatus 250 includes a detection apparatus body and a light shielding component. The light shielding component is the foregoing light shielding component. For related descriptions, refer to the descriptions in the foregoing embodiments.

The detection apparatus body includes a window, and detection signal light emitted by the detection apparatus body is emitted through the window. The light shielding component is disposed outside the window.

Optionally, an obstacle column on a light shielding plate in the light shielding component is closer to the window than a sawtooth.

Optionally, the detection apparatus cylinder further includes a receive end, and the receive end is configured to receive an echo signal corresponding to the detection signal light. The echo signal is used to obtain related information of a target in a field of view, for example, a feature quantity like a position, a shape, or a speed of the target.

**An embodiment of this application further provides a terminal.** The terminal includes a detection apparatus, a light shielding component, and a windshield, and the light shielding component is the **foregoing light shielding component,** for example, the light shielding component described in an embodiment shown in FIG. 3, FIG. 5, FIG. 9, FIG. 14, FIG. 15, FIG. 17, FIG. 18, FIG. 19, FIG. 20, FIG. 21, FIG. 22, FIG. 23, or FIG. 24, and/or a possible implementation thereof.

The detection apparatus includes a window, and detection signal light emitted by the detection apparatus is emitted through the window.

The detection apparatus is disposed in a windshield of a terminal, the windshield of the terminal has a first transparent surface, and the light shielding component is disposed between the window and the first transparent surface.

Optionally, the foregoing terminal may include a mobile platform or a transportation tool like a vehicle, a ship, an airplane, a train, a spacecraft, an uncrewed aerial vehicle, or a robot.

FIG. 26A is a diagram of a possible structure of a terminal according to an embodiment of this application. For example, the terminal is a vehicle. The vehicle includes a detection apparatus and a light shielding component. Both the detection apparatus and the light shielding component are disposed in a windshield of the vehicle. Optionally, the detection apparatus may be disposed on an instrument panel of the vehicle.

Through the light shielding component, stray light in front of the detection apparatus can be significantly reduced, and a capability of the detection apparatus to resist stray light interference is improved, so that good signal effectiveness can be maintained when the detection apparatus is disposed in a vehicle compartment. In this way, the detection apparatus is free from impact of an external high temperature, rain, and weathering. This not only prolongs a service life of a lidar, but also makes an installation position of the lidar more flexible, so that user experience is improved.

It should be understood that the installation position of the detection apparatus shown in FIG. 26A is merely an example. In a specific implementation process, the detection apparatus may be installed in a transparent housing at any position of the terminal. For example, FIG. 26B is a diagram of another possible structure of a terminal according to an embodiment of this application. Both the detection apparatus and the light shielding component are disposed in the windshield of the vehicle. The detection apparatus is disposed above a cockpit, and is optionally fastened through an installation bracket to maintain stability.

In descriptions of this application, orientation or position relationships indicated by terms "center", "above", "below", "vertical", "horizontal", "inner", "outer", and the like are orientation or position relationships based on the accompanying drawings, and are only intended to facilitate and simplify the description of this application, but are not intended to indicate or imply that an apparatus or an element needs to have a specific orientation and be constructed and operated in a specific orientation, and therefore cannot be understood as a limitation on this application.

In embodiments of this application, the term like "example" or "for example" is used to represent giving an example, an illustration, or a description. Any embodiment or design scheme described as "example" or "for example" in this application should not be explained as being more preferred or having more advantages than another embodiment or design scheme. Exactly, use of the word like "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may represent: a, b, c, a and b, a and c, b and c, and a and b and c, where a, b, and c may be singular or plural. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of obj ects. For example, first detection signal light and second detection signal light are merely for ease of description, but do not indicate differences in sources, sequences, importance, and the like of the first detection signal light and the second detection signal light. In some embodiments, the first detection signal light and the second detection signal light may alternatively be same detection signal light.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

## Claims

1. A light shielding component, wherein the light shielding component comprises:
   a first light shielding plate, wherein a protruding obstacle column and a plurality of protruding sawteeth are disposed on the first light shielding plate, and a vertical height of the obstacle column is greater than vertical heights of the plurality of sawteeth.

2. The light shielding component according to claim 1, wherein a surface of the obstacle column and surfaces of the plurality of sawteeth are made of a first material, and a reflectivity of the first material is lower than a first threshold.

3. The light shielding component according to claim 1, wherein each of the plurality of sawteeth tilts toward a side of the obstacle column.

4. The light shielding component according to any one of claims 1 to 3, wherein the light shielding component is disposed outside a window of a detection apparatus; and
   the obstacle column is located between the window and the plurality of sawteeth.

5. The light shielding component according to claim 4, wherein the light shielding component is located between the window and a first transparent surface, each of the plurality of sawteeth comprises a first edge and a second edge, the first edge is close to the window, and the second edge is away from the window; and
   an included angle between the second edge and a horizontal direction is related to an included angle between the first transparent surface and the horizontal direction and an angle of view of the detection apparatus in a vertical direction.

6. The light shielding component according to claim 5, wherein the included angle between the second edge and the horizontal direction satisfies the following formula: $\gamma = 2\beta - \dfrac{\alpha}{2}$, wherein
   $\gamma$ is the included angle between the second edge and the horizontal direction, $\alpha$ is the angle of view of the detection apparatus, and $\beta$ is the included angle between the first transparent surface and the horizontal direction.

7. The light shielding component according to claim 5 or 6, wherein an included angle between the first light shielding plate and the horizontal direction is half of the angle of view of the detection apparatus in the vertical direction.

8. The light shielding component according to any one of claims 1 to 7, wherein a first cavity is further disposed on the first light shielding plate, and an opening of the first cavity is provided on a side that is of the obstacle column and that is away from the plurality of sawteeth; and
   a length of the opening of the first cavity is less than a length of a bottom wall of a second cavity.

9. The light shielding component according to any one of claims 1 to 8, wherein the second cavity is further disposed on the first light shielding plate, and an opening of the second cavity is provided between the obstacle column and the plurality of sawteeth; and a length of the opening of the second cavity is less than a length of a bottom wall of the first cavity.

10. The light shielding component according to any one of claims 1 to 9, wherein the first light shielding plate is of a trapezoid structure, and the obstacle column is disposed on a leg of the first light shielding plate.

11. The light shielding component according to claim 10, wherein the plurality of sawteeth are disposed on the leg of the first light shielding plate.

12. The light shielding component according to any one of claims 1 to 11, wherein the plurality of sawteeth are implemented through columnar bodies whose cross sections are triangular, and the sawteeth extend from a leg on one side of the first light shielding plate to a leg on the other side of the first light shielding plate.

13. The light shielding component according to any one of claims 1 to 12, wherein the obstacle column tilts toward a side away from the plurality of sawteeth, and an included angle between the obstacle column and a surface of the first light shielding plate falls within [35°, 45°].

14. The light shielding component according to claim 13, wherein the obstacle column comprises a first branch and a second branch, the first branch tilts toward the side away from the plurality of sawteeth, and the second branch is connected to the first branch and a body of the first light shielding plate; and
an included angle between the first branch and the horizontal direction is a first angle, an included angle between the second branch and the horizontal direction is a second angle, and the first angle is less than the second angle.

15. The light shielding component according to any one of claims 1 to 13, wherein the light shielding component further comprises a second light shielding plate and a third light shielding plate, wherein
the third light shielding plate and the second light shielding plate are disposed on two sides in a direction from the obstacle column to the plurality of sawteeth, and are separately connected to the first light shielding plate.

16. The light shielding component according to claim 15, wherein the light shielding component is located between the window and the first transparent surface; and
a plurality of beams of detection signal light from the window are incident to the first transparent surface, and the light shielding component is configured to consume energy of at least one beam of detection signal light reflected by the first transparent surface.

17. The light shielding component according to claim 16, wherein the plurality of detection optical signals comprise first detection signal light, and the first detection signal light is reflected by the first transparent surface to form first reflected light; and
the first reflected light is transmitted to the plurality of sawteeth, and the plurality of sawteeth are configured to consume energy of the first reflected light.

18. The light shielding component according to claim 16, wherein the plurality of detection optical signals comprise second detection signal light, and the second detection signal light is reflected by the first transparent surface to form second reflected light;

the second reflected light is transmitted to the plurality of sawteeth, and is reflected by the plurality of sawteeth to form third reflected light; and
the third reflected light is transmitted to the obstacle column, and the obstacle column is configured to block the third reflected light.

19. The light shielding component according to claim 8, wherein the light shielding component is located between the window and the first transparent surface; and
third detection signal light from the window is transmitted to the obstacle column, and is reflected by the obstacle column to form fourth reflected light, the fourth reflected light is transmitted to the first cavity, and the first cavity is configured to consume energy of the fourth reflected light.

20. The light shielding component according to claim 9, wherein the light shielding component is located between the window and the first transparent surface;

fourth detection signal light from the window is incident to the first transparent surface and is reflected by the first transparent surface, to form fifth reflected light;
the fifth reflected light is transmitted to the plurality of sawteeth, and is reflected by the plurality of sawteeth to form sixth reflected light; and
the sixth reflected light is transmitted to the obstacle column, and is reflected by the obstacle column to form seventh reflected light, and the second cavity is configured to consume energy of the seventh reflected light.

21. A detection apparatus, wherein the detection apparatus comprises a detection apparatus body and a light shielding component, and the light shielding component is the light shielding component according to any one of claims 1 to 20;

the detection apparatus body comprises a window, and detection signal light emitted by the detection apparatus body is emitted through the window; and
the light shielding component is disposed outside the window.

22. A terminal, wherein the terminal comprises a detection apparatus, a light shielding component, and a windshield, and the light shielding component is the light shielding component according to any one of claims 1 to 17;

the windshield of the terminal has a first transparent surface;
the detection apparatus comprises a window, and detection signal light emitted by the detection apparatus is emitted through the window; and
the light shielding component is disposed between the window and the first transparent surface.

23. The terminal according to claim 22, wherein the terminal is a vehicle, an uncrewed aerial vehicle, or a robot.

FIG. 1

FIG. 2A

FIG. 2B

100

First surface

101

10

FIG. 3

Transparent surface

Detection apparatus

Window

T1

R1

Absorb

FIG. 4A

Detection apparatus

Transparent surface

Window

T1

R1

FIG. 4B

100

102

101

First surface

10

FIG. 5

Detection apparatus

Transparent surface

T2

R2

R3

Window

FIG. 6

Detection apparatus

Transparent surface

R1

FIG. 7

Transparent surface

Detection apparatus

$\beta$

$\beta-\alpha/2$

$\alpha$

Window

$2\beta-\alpha/2$

$2\beta-\alpha/2$

FIG. 8A

Transparent surface

Detection apparatus

$\alpha$

Window

$\alpha/2$

$2\beta-\alpha/2$

FIG. 8B

Transparent
surface

Detection apparatus

901

902

(a)

Detection apparatus

2

1

901

Diffuse reflection

(b)

Transparent
surface

Detection apparatus

3

1

901

Diffuse reflection

(c)

FIG. 9

Windshield

Detection apparatus

Engine compartment cover

1001

FIG. 10

100

102

101

10

103

FIG. 11

Detection apparatus

T3

Window

R4

FIG. 12

100

102

101

10

104

FIG. 13

Transparent surface

Detection apparatus

T4

R5

Window

R6

FIG. 14

100

102

101

10

104

FIG. 15

FIG. 16

FIG. 17

FIG. 18

FIG. 19

EP 4 614 217 A1

100

30

202

201

102

104

Fourth side

Third side

101

Upper base

10

FIG. 20

100

102

101

10

103

FIG. 21

FIG. 22

FIG. 23

100

30

202

104

201

102

103

Fourth side

Third side

101

Upper base

10

FIG. 24

Detection apparatus 250

Detection
apparatus body    Window

100

102

101

10

104

FIG. 25A

Detection apparatus 250

FIG. 25B

FIG. 26A

FIG. 26B

## INTERNATIONAL SEARCH REPORT

| International application No. |
|---|
| **PCT/CN2022/133515** |

### A. CLASSIFICATION OF SUBJECT MATTER

G02F 1/13(2006.01)i

According to International Patent Classification (IPC) or to both national classification and IPC

### B. FIELDS SEARCHED

Minimum documentation searched (classification system followed by classification symbols)

G02F,G02B

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC: 探测器, 反射, 杂散光, 杂光, 遮光, 消光, sensor, reflect +, stray, parasitic, vagabond, light, shading, extinction

### C. DOCUMENTS CONSIDERED TO BE RELEVANT

| Category* | Citation of document, with indication, where appropriate, of the relevant passages | Relevant to claim No. |
|---|---|---|
| X | CN 105074564 A (HONDA MOTOR CO., LTD.) 18 November 2015 (2015-11-18) description, paragraphs [0039]-[0151], and figures 1-23 | 1-7, 10-13, 15-18, 21-23 |
| X | DE 102011114850 A1 (CONTINENTAL AUTOMOTIVE GMBH) 11 April 2013 (2013-04-11) description, paragraphs [0035]-[0041], and figures 1-6 | 1-7, 10-13, 15-18, 21-23 |
| A | CN 217515078 U (HUIZHOU DESAY SV AUTOMOTIVE CO., LTD.) 30 September 2022 (2022-09-30) entire document | 1-23 |
| A | DE 102014217749 A1 (CONTI TEMIC MICROELECTRONIC GMBH) 10 March 2016 (2016-03-10) entire document | 1-23 |
| A | DE 102014224860 A1 (CONTI TEMIC MICROELECTRONIC GMBH) 09 June 2016 (2016-06-09) entire document | 1-23 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 August 2023** | **09 August 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/133515** |

| C. | DOCUMENTS CONSIDERED TO BE RELEVANT | |
| --- | --- | --- |
| Category* | Citation of document, with indication, where appropriate, of the relevant passages | Relevant to claim No. |
| A | EP 2965956 A1 (CONTI TEMIC MICROELECTRONIC GMBH et al.) 13 January 2016 (2016-01-13)<br>entire document | 1-23 |
| A | US 2020192189 A1 (HONDA MOTOR CO., LTD.) 18 June 2020 (2020-06-18)<br>entire document | 1-23 |
| A | WO 2014146865 A1 (ROBERT BOSCH GMBH) 25 September 2014 (2014-09-25)<br>entire document | 1-23 |

Form PCT/ISA/210 (second sheet) (July 2022)

**INTERNATIONAL SEARCH REPORT**
Information on patent family members

International application No.

**PCT/CN2022/133515**

| Patent document cited in search report | | | Publication date (day/month/year) | Patent family member(s) | | | Publication date (day/month/year) |
|---|---|---|---|---|---|---|---|
| CN | 105074564 | A | 18 November 2015 | DE | 112013006807 | T5 | 17 December 2015 |
| | | | | DE | 112013006807 | B4 | 13 January 2022 |
| | | | | BR | 112015021847 | A2 | 18 July 2017 |
| | | | | US | 2016023620 | A1 | 28 January 2016 |
| | | | | US | 10189421 | B2 | 29 January 2019 |
| | | | | WO | 2014141357 | A1 | 18 September 2014 |
| | | | | JP | 6076460 | B2 | 08 February 2017 |
| | | | | JPWO | 2014141357 | A1 | 16 February 2017 |
| DE | 102011114850 | A1 | 11 April 2013 | DE | 102011114850 | B4 | 09 February 2023 |
| CN | 217515078 | U | 30 September 2022 | None | | | |
| DE | 102014217749 | A1 | 10 March 2016 | None | | | |
| DE | 102014224860 | A1 | 09 June 2016 | None | | | |
| EP | 2965956 | A1 | 13 January 2016 | EP | 2965956 | B1 | 27 February 2019 |
| US | 2020192189 | A1 | 18 June 2020 | JP | 2020097332 | A | 25 June 2020 |
| | | | | JP | 7048479 | B2 | 05 April 2022 |
| | | | | US | 11460754 | B2 | 04 October 2022 |
| WO | 2014146865 | A1 | 25 September 2014 | DE | 102013205165 | A1 | 09 October 2014 |
| | | | | US | 2016144797 | A1 | 26 May 2016 |
| | | | | US | 10106102 | B2 | 23 October 2018 |
| | | | | EP | 2976237 | A1 | 27 January 2016 |
| | | | | EP | 2976237 | B1 | 01 August 2018 |

Form PCT/ISA/210 (patent family annex) (July 2022)